# EUROPEAN PATENT SPECIFICATION

(11) **EP 3 378 714 B1**
(45) Date of publication and mention of the grant of the patent: **01.04.2020**
(21) Application number: 17820248.7
(22) Date of filing: 29.06.2017
(51) Int. Cl.: B60T 8/26, B60T 8/1766, B60T 8/24, B62L 3/08, B60T 8/17

(54) **LEANING VEHICLE**
NEIGEFAHRZEUG
VÉHICULE À INCLINAISON

(30) Priority: 29.06.2016 JP 2016129263; 22.07.2016 JP 2016144421; 22.07.2016 JP 2016144440; 31.10.2016 JP 2016213121
(43) Date of publication of application: 26.09.2018
(73) Proprietor: Yamaha Hatsudoki Kabushiki Kaisha, Iwata-shi, Shizuoka 438-8501 (JP); Advics Co., Ltd., Kariya-shi, Aichi 448-8688 (JP)
(72) Inventor: HIGUCHI, Shoma, Iwata-shi Shizuoka 438-8501 (JP); MIZUTANI, Takaaki, Iwata-shi Shizuoka 438-8501 (JP); KASAI, Satoshi, Iwata-sh Shizuoka 438-8501 (JP); FUKUDA, Tadashi, Iwata-shi Shizuoka 438-8501 (JP); SEKI, Yoshimichi, Iwata-shi Shizuoka 438-8501 (JP); TERASAKA, Masato, Kariya-shi Aichi 448-8688 (JP); USHIROZAKO, Shinji, Kariya-shi Aichi 448-8688 (JP)
(74) Representative: Stöckeler, Ferdinand
(86) International application number: PCT/JP2017/023846
(87) International publication number: WO 2018/003894

(56) References cited:
- EP-A1- 2 810 836
- EP-A2- 1 721 797
- EP-A2- 1 839 980
- DE-A1-102006 021 186
- DE-A1-102008 021 523
- DE-A1-102008 026 531
- JP-A- 2003 025 978
- JP-A- 2011 068 253
- JP-A- 2013 032 052

## Description

### TECHNICAL FIELD

The present invention relates to a leaning vehicle including an interlock braking apparatus having a plurality of braking operation elements.

### BACKGROUND ART

A leaning vehicle capable of turning in a leaning position that includes interlock braking apparatus that can cause the front-wheel and rear-wheel brakes to work in an interlocked manner is disclosed in Japanese Patent No. 5715523 (Patent Document 1 listed below). This leaning vehicle includes a brake bar that serves as a front-wheel braking operation element for controlling the braking force for the front wheel, and a brake pedal that serves as a rear-wheel braking operation element for controlling the braking force for the rear wheel. When the brake pedal serving as the rear-wheel braking operation element is operated, the interlock braking apparatus on this leaning vehicle drives the front-wheel and rear-wheel brake calipers in an interlocked manner. A vehicle capable of turning in a leaning position may be hereinafter referred to as "leaning vehicle" or simply "vehicle".

Documents DE 10 2006 021186 A1 and EP 2 810 836 A1 disclose leaning vehicles including interlock braking apparatus and brake force distribution between front and rear wheels showing adaptive features.

### PRIOR ART DOCUMENTS

### PATENT DOCUMENTS

Patent Document 1: Japanese Patent No. 5715523

### SUMMARY OF THE INVENTION

### PROBLEMS TO BE SOLVED BY THE INVENTION

In an interlock braking apparatus on a leaning vehicle, when the rider operates the front-wheel braking operation element, braking force is applied not only to the front wheel, but also to the rear wheel. Further, in the interlock braking apparatus, when the rider operates the rear-wheel braking operation element, braking force is applied not only to the rear wheel, but also to the front wheel. In such an interlock braking apparatus, workings associated with the front-wheel braking operation element and workings associated with the rear-wheel braking operation element are set depending on the type of the leaning vehicle. For example, such workings for the interlock braking apparatus may be set to provide braking force while reducing changes in the front-rear axis of the leaning vehicle with the front-wheel and rear-wheel braking operation elements relative to the horizontal plane.

It is desired to increase the degree of setting freedom for an interlock braking apparatus that applies braking force to the front and rear wheels of a leaning vehicle including a front-wheel braking operation element and a rear-wheel braking operation element.

An object of the present invention is to provide a leaning vehicle including a front-wheel braking operation element, a rear-wheel braking operation element, and an interlock braking apparatus with higher degree of setting freedom.

### MEANS FOR SOLVING THE PROBLEMS

The present inventors did research to increase the degree of setting freedom for an interlock braking apparatus including a plurality of braking operation elements mounted on a leaning vehicle. Particularly, they investigated into how braking force is applied in various travelling environments using leaning vehicles of various types. First, they investigated in detail into how braking force is applied in a leaning vehicle that includes a front-wheel braking operation element and a rear-wheel braking operation element and a non-interlock braking apparatus where the front-wheel brake and the rear-wheel brake do not work in an interlocked manner.

Through this research, the inventors found that a rider changes how braking force is applied to the front and rear wheels depending on whether the road surface on which the leaning vehicle is travelling is an uphill slope or a downhill slope or a horizontal surface. That is, they found that the inclination of the road surface on which the leaning vehicle is travelling with respect to the front-rear direction of the vehicle significantly contributes to how braking force is applied to the front and rear wheels. This is presumably because the position of a leaning vehicle including a front-wheel and rear-wheel braking operation elements is greatly affected by operations of the front-wheel and rear-wheel braking operation elements.

The inventors further investigated into how braking force is applied in a leaning vehicle including an interlock braking apparatus having a front-wheel and rear-wheel braking operation elements. This investigation focused on how braking force is applied if the travelling environment does not affect the ratio between the braking force applied to the front wheel and the braking force applied to the rear wheel when the front-wheel braking operation element has been operated, nor the ratio between the braking force applied to the rear wheel and the braking force applied to the front wheel when the rear-wheel braking operation element has been operated. That is, it focused on cases where the travelling environment does not affect the ratio between the front-wheel braking force and the rear-wheel braking force generated by the interlock brake.

The inventors investigated into how braking force is applied by means of an interlock brake using leaning vehicles of different types and in various travelling environments. They found that, in various travelling environments, the inclination of the road surface on which the vehicle is travelling with respect to the front-rear direction of the vehicle significantly contributes to the ratio between the front-wheel braking force and the rear-wheel braking force generated by the interlock brake.

The inventors further considered using leaning vehicles of various types and setting the ratio between the front-wheel braking force and the rear-wheel braking force generated by the interlock braking apparatus so as to address various travelling environments. They found that, if an uphill slope, a downhill slope and a horizontal surface are all to be addressed, the range within which the ratio can be set may be narrow. That is, they found that the degree of setting freedom may be low.

This is presumably because, when the front-wheel braking operation element is operated, the interlock braking apparatus applies braking force not only to the front wheel but also to the rear wheel, and, when the rear-wheel braking operation element is operated, the apparatus applies braking force not only to the rear wheel but also to the front wheel; and because the position of the leaning vehicle is affected by the ratio between the braking force applied to the front wheel and the braking force applied to the rear wheel when the front-wheel braking operation element has been operated, as well as the ratio between the braking force applied to the rear wheel and the braking force applied to the front wheel when the rear-wheel braking operation element has been operated.

Based on these findings, the present inventors arrived at an interlock braking apparatus that controls the braking force being applied to the front wheel and that being applied the rear wheel in such a manner that the ratio between the braking force being applied to the rear wheel to the braking force being applied to the front wheel when the front-wheel braking operation element is being operated and the rear-wheel braking operation element is not being operated varies depending on whether the vehicle is travelling on a downhill or uphill slope or the vehicle is travelling on a horizontal road surface. They found that, by virtue of this apparatus, a leaning vehicle may be provided that includes a front-wheel braking operation element and a rear-wheel braking operation element and that includes an interlock brake with high degree of setting freedom.

Further, the present inventors arrived at an interlock braking apparatus that controls the braking force being applied to the front wheel and that being applied to the rear wheel in such a manner that the ratio of the braking force being applied to the front wheel to the braking force being applied to the rear wheel when the rear-wheel braking operation element is being operated and the front-wheel braking operation element is not being operated varies depending on whether the vehicle is travelling on a downhill or uphill slope or the vehicle is travelling on a horizontal road surface. They found that, by virtue of this apparatus, too, a leaning vehicle may be provided that includes a front-wheel braking operation element, a rear-wheel braking operation element and an interlock brake with high degree of setting freedom.

### (Arrangement 1)

A leaning vehicle of Arrangement 1 of the present invention includes: a vehicle-body frame; and a front wheel and a rear wheel supported on the vehicle-body frame. The vehicle-body frame inclines to the left of the vehicle while the vehicle is turning to the left, and inclines to the right of the vehicle while the vehicle is turning to the right. The leaning vehicle includes: a front-wheel brake provided on the front wheel for applying braking force to the front wheel; a rear-wheel brake provided on the rear wheel for applying braking force to the rear wheel; a front-wheel braking operation element operable by a rider for generating braking force for the front-wheel brake in response to an operation; and a rear-wheel braking operation element operable by the rider for generating braking force for the rear-wheel brake in response to an operation. The leaning vehicle includes an interlock braking apparatus configured to perform at least one of an operation in which braking force is applied not only to the front wheel but also to the rear wheel when the rider has operated the front-wheel braking operation element and an operation in which braking force is applied not only to the rear wheel but also to the front wheel when the rider has operated the rear-wheel braking operation element. That is, when at least one braking operation element of the front-wheel braking operation element and the rear-wheel braking operation element is being operated and the other braking operation element is not being operated, the interlock braking apparatus applies braking force to both one wheel to which braking force is to be applied in response to an operation of the one braking operation element and the other wheel to which braking force is to be applied in response to an operation of the other braking operation element.

The interlock braking apparatus controls braking force being applied to the front wheel and that being applied to the rear wheel in such a manner that a ratio of braking force being applied to the rear wheel to braking force being applied to the front wheel when the front-wheel braking operation element is being operated and the rear-wheel braking operation element is not being operated while the vehicle is travelling on a downhill slope or uphill slope is different from a ratio of braking force being applied to the rear wheel to braking force being applied to the front wheel when the front-wheel braking operation element is being operated and the rear-wheel braking operation element is not being operated while the vehicle is travelling on a horizontal road surface.

Or, the interlock braking apparatus controls the braking force being applied to the front wheel and that being applied to the rear wheel in such a manner that a ratio of braking force being applied to the front wheel to braking force being applied to the rear wheel when the rear-wheel braking operation element is being operated and the front-wheel braking operation element is not being operated while the vehicle is travelling on a downhill slope or uphill slope is different from a ratio of braking force being applied to the front wheel to braking force being applied to the rear wheel when the rear-wheel braking operation element is being operated and the front-wheel braking operation element is not being operated while the vehicle is travelling on a horizontal road surface.

That is, the interlock braking apparatus controls the braking force applied to the other wheel in such a manner that the ratio of the braking force applied to the other wheel to the braking force applied to the one wheel while the vehicle is travelling on either a downhill slope or uphill slope when at least one braking operation element of the front-wheel braking operation element and the rear-wheel braking operation element is being operated and the other braking operation element is not being operated is different from the ratio found while the vehicle is travelling on a horizontal road surface with respect to the front-rear direction of the vehicle.

In Arrangement 1, the apparatus is adjusted such that the ratio between the braking force applied to the front wheel by the interlock brake and the braking force applied to the rear wheel when the front-wheel or rear-wheel braking operation element is being operated varies depending on the inclination status of the road surface with respect to the front-rear direction of the vehicle, such as a downhill slope, an uphill slope or a horizontal surface. This provides a leaning vehicle including a front-wheel braking operation element, a rear-wheel braking operation element and an interlock braking apparatus with higher degree of setting freedom.

In Arrangement 1, the leaning vehicle may include a road-surface inclination detection unit configured to detect the vehicle travelling on a downhill slope or an uphill slope and the vehicle travelling on a horizontal road surface.

### (Arrangement 2)

Starting from the leaning vehicle of Arrangement 1, the interlock braking apparatus may further include a road-surface inclination detection unit configured to detect an inclination status of a road surface on which the vehicle is travelling with respect to a front-rear direction of the vehicle.

The interlock braking apparatus may include: a front-wheel brake operation amount detection unit configured to detect an operation amount of the front-wheel braking operation element; and a rear-wheel interlock braking force generation unit configured to generate braking force to be applied to the rear wheel based on the inclination status of the road surface with respect to the front-rear direction of the vehicle obtained by the road-surface inclination detection unit and the operation amount of the front-wheel braking operation element obtained by the front-wheel brake operation amount detection unit. Or, the interlock braking apparatus may include: a rear-wheel brake operation amount detection unit configured to detect an operation amount of the rear-wheel braking operation element; and a front-wheel interlock braking force generation unit configured to generate braking force to be applied to the front wheel based on the inclination status of the road surface with respect to the front-rear direction of the vehicle obtained by the road-surface inclination detection unit and the operation amount of the rear-wheel braking operation element obtained by the rear-wheel brake operation amount detection unit.

That is, the interlock braking apparatus may include: an one brake operation amount detection unit configured to detect the operation amount of the one brake operation element; and an other interlock braking force generation unit configured to generate braking force to be applied to the other wheel depending on the inclination status of the road surface with respect to the front-rear direction of the vehicle obtained by the road-surface inclination detection unit and the operation amount of the one braking operation element obtained by the one brake operation amount detection unit.

The rear-wheel interlock braking force generation unit controls the braking force being applied to the rear wheel in such a manner that a ratio of braking force being applied to the rear wheel to braking force being applied to the front wheel when the front-wheel braking operation element is being operated and the rear-wheel braking operation element is not being operated if the road-surface inclination detection unit has detected that the road surface is a downhill slope or an uphill slope is different from a ratio of braking force being applied to the rear wheel to braking force being applied to the front wheel when the front-wheel braking operation element is being operated and the rear-wheel braking operation element is not being operated if the road-surface inclination detection unit has detected that the road surface is horizontal.

The front-wheel interlock braking force generation unit controls the braking force being applied to the front wheel in such a manner that a ratio of braking force being applied to the front wheel to braking force being applied to the rear wheel when the rear-wheel braking operation element is being operated and the front-wheel braking operation element is not being operated if the road-surface inclination detection unit has detected that the road surface is a downhill slope or an uphill slope is different from a ratio of braking force being applied to the front wheel to braking force being applied to the rear wheel when the rear-wheel brake operation element is being operated and the front-wheel braking operation element is not being operated if the road-surface inclination detection unit has detected that the road surface is horizontal.

That is, the interlock braking apparatus may control the braking force being applied to the other wheel in such a manner that the ratio of the braking force being applied to the other wheel to the braking force being applied to the one wheel while the vehicle is travelling on either a downhill slope or an uphill slope when at least one braking operation element of the front-wheel braking operation element and the rear-wheel braking operation element is being operated and the other braking operation element is not being operated is different from the ratio found while the vehicle is travelling on a horizontal road surface with respect to the front-rear direction of the vehicle.

### (Arrangement 3)

Starting from the leaning vehicle of Arrangement 2, the interlock braking apparatus may include: the front-wheel brake operation amount detection unit; the rear-wheel interlock braking force generation unit; and a front-wheel braking force generation unit configured to generate braking force to be applied to the front wheel based on the operation amount of the front-wheel braking operation element obtained by the front-wheel brake operation amount detection unit. Or, the interlock braking apparatus may include: the rear-wheel brake operation amount detection unit; the front-wheel interlock braking force generation unit; and a rear-wheel braking force generation unit configured to generate braking force to be applied to the rear wheel based on the operation amount of the rear-wheel braking operation element obtained by the rear-wheel brake operation amount detection unit.

That is, the interlock braking apparatus may include a one braking force generation unit configured to generate the braking force to be applied to the one wheel depending on the operation amount of the one braking operation element obtained by the one brake operation amount detection unit.

### (Arrangement 4)

Starting from the leaning vehicle of Arrangement 3, the front-wheel braking force generation unit may generate the braking force to be applied to the front wheel depending on the inclination status of the road surface with respect to the front-rear direction of the vehicle obtained by the road-surface inclination detection unit. Or, the rear-wheel braking force generation unit may generate the braking force to be applied to the rear wheel depending on the inclination status of the road surface with respect to the front-rear direction of the vehicle obtained by the road-surface inclination detection unit.

That is, the one braking force generation unit may generate the braking force to be applied to the one wheel depending on the inclination status of the road surface with respect to the front-rear direction of the vehicle obtained by the road-surface inclination detection unit.

### (Arrangement 5)

Starting from the leaning vehicle of any one of Arrangements 1 to 4, the interlock braking apparatus controls the braking force being applied to the front wheel and that being applied to the rear wheel in such a manner that the ratio of the braking force being applied to the rear wheel to the braking force being applied to the front wheel when the front-wheel braking operation element is being operated and the rear-wheel braking operation element is not being operated while the vehicle is travelling on a downhill slope or an uphill slope is different from the ratio of the braking force being applied to the rear wheel to the braking force being applied to the front wheel when the front-wheel braking operation element is being operated and the rear-wheel braking operation element is not being operated while the vehicle is travelling on a horizontal road surface. Further, the interlock braking apparatus is capable of controlling the braking force being applied to the front wheel and that being applied to the rear wheel in such a manner that the ratio of the braking force being applied to the front wheel to the braking force being applied to the rear wheel when the rear-wheel braking operation element is being operated and the front-wheel braking operation element is not being operated while the vehicle is travelling on a downhill slope or an uphill slope is different from the ratio of the braking force being applied to the front wheel to the braking force being applied to the rear wheel when the rear-wheel braking operation element is being operated and the front-wheel braking operation element is not being operated while the vehicle is travelling on a horizontal road surface.

That is, starting from Arrangements 1 to 4, the one braking operation element may be the front-wheel braking operation element, the other braking operation element may be the rear-wheel braking operation element, the one wheel may be the front wheel, and the other wheel may be the rear wheel. The interlock braking apparatus is capable of controlling the braking force being applied to the rear wheel in such a manner that braking force is applied to both the rear wheel and the front wheel when the front-wheel braking operation element is being operated and the rear-wheel braking operation element is not being operated and that the ratio of the braking force being applied to the rear wheel to the braking force applied to the front wheel while the vehicle is travelling on either a downhill slope or an uphill slope is different from the ratio found while the vehicle is travelling on a horizontal road surface with respect to the front-rear direction of the vehicle. Furthermore, the interlock braking apparatus may control the braking force being applied to the front wheel in such a manner that braking force is applied to both the front wheel and the rear wheel when the rear-wheel braking operation element is being operated and the front-wheel braking operation element is not being operated and that the ratio of the braking force being applied to the front wheel to the braking force applied to the rear wheel while the vehicle is travelling on either a downhill slope or an uphill slope is different from the ratio found while the vehicle is travelling on a horizontal road surface with respect to the front-rear direction of the vehicle.

### (Arrangement 6)

Starting from the leaning vehicle of one of Arrangements 2 and 5, the interlock braking apparatus may include the front-wheel brake operation amount detection unit and the rear-wheel interlock braking force generation unit and include the rear-wheel brake operation amount detection unit and the front-wheel interlock braking force generation unit.

In other words, starting from the leaning vehicle of Arrangement 5, the interlock braking apparatus may include:
a road-surface inclination detection unit configured to detect an inclination status of a road surface on which the vehicle is travelling with respect to a front-rear direction of the vehicle;
a front-wheel brake operation amount detection unit configured to detect an operation amount of the front-wheel braking operation element;
a rear-wheel interlock braking force generation unit configured to generate braking force to be applied to the rear wheel depending on the inclination status of the road surface with respect to the front-rear direction of the vehicle and the operation amount of the front-wheel braking operation element obtained by the road-surface inclination detection unit and the front-wheel brake operation amount detection unit;
a rear-wheel brake operation amount detection unit configured to detect an operation amount of the rear-wheel braking operation element; and
a front-wheel interlock braking force generation unit configured to generate braking force to be applied to the front wheel depending on the inclination status of the road surface with respect to the front-rear direction of the vehicle and the operation amount of the rear-wheel braking operation element obtained by the road-surface inclination detection unit and the rear-wheel brake operation amount detection unit. In such implementations, the interlock braking apparatus controls the braking force being applied to the rear wheel in such a manner that the ratio of the braking force being applied to the rear wheel to the braking force being applied to the front wheel while the vehicle is travelling on either a downhill slope or an uphill slope when the front-wheel braking operation element is being operated and the rear-wheel braking operation element is not being operated is different from the ratio found while the vehicle is travelling on a road surface that is horizontal with respect to the front-rear direction of the vehicle. Further, the interlock braking apparatus may control the braking force being applied to the front wheel in such a manner that the ratio of the braking force being applied to the front wheel to the braking force being applied to the rear wheel while the vehicle is travelling on either a downhill slope or an uphill slope when the rear-wheel braking operation element is being operated and the front-wheel braking operation element is not being operated is different from the ratio found while the vehicle is travelling on a road surface that is horizontal with respect to the front-rear direction of the vehicle.

### (Arrangement 7)

Starting from the leaning vehicle of one of Arrangements 3 and 5, the interlock braking apparatus may include the front-wheel brake operation amount detection unit and the rear-wheel interlock braking force generation unit and may include the rear-wheel brake operation amount detection unit and the front-wheel interlock braking force generation unit.

That is, starting from the leaning vehicle of Arrangement 6, the interlock braking apparatus may include a front-wheel braking force generation unit configured to generate the braking force to be applied to the front wheel based on the operation amount of the front-wheel braking operation element obtained by the front-wheel brake operation amount detection unit and a rear-wheel braking force generation unit configured to generate braking force to be applied to the rear wheel based on the operation amount of the rear-wheel braking operation element obtained by the rear-wheel brake operation amount detection unit.

### (Arrangement 8)

Starting from the leaning vehicle of one of Arrangements 4 and 5, the front-wheel braking force generation unit may generate the braking force to be applied to the front wheel depending on the inclination status of the road surface with respect to the front-rear direction of the vehicle obtained by the road-surface inclination detection unit. Starting from this arrangement, the rear-wheel braking force generation unit may generate the braking force to be applied to the rear wheel depending on the inclination status of the road surface with respect to the front-rear direction of the vehicle obtained by the road-surface inclination detection unit.

That is, starting from Arrangement 7, the front-wheel braking force generation unit may generate the braking force applied to the front wheel depending on the inclination status of the road surface with respect to the front-rear direction of the vehicle obtained by the road-surface inclination detection unit. Starting from this arrangement, the rear-wheel braking force generation unit may generate the braking force to be applied to the rear wheel depending on the inclination status of the road surface with respect to the front-rear direction of the vehicle obtained by the road-surface inclination detection unit.

### (Arrangement 9)

Starting from the leaning vehicle of any one of Arrangements 1 to 8, the interlock braking apparatus is capable of controlling the braking force being applied to the front wheel and that being applied to the rear wheel in such a manner that a ratio of braking force being applied to the rear wheel to braking force being applied to the front wheel when the front-wheel braking operation element is being operated and the rear-wheel braking operation element is not being operated while the vehicle is travelling on a downhill slope is smaller than the ratio of the braking force being applied to the rear wheel to the braking force being applied to the front wheel when the front-wheel braking operation element is being operated and the rear-wheel braking operation element is not being operated while the vehicle is travelling on a horizontal road surface. In such implementations, the interlock braking apparatus is further capable of controlling the braking force being applied to the front wheel and that being applied to the rear wheel in such a manner that a ratio of braking force being applied to the rear wheel to braking force being applied to the front wheel when the front-wheel braking operation element is being operated and the rear-wheel braking operation element is not being operated while the vehicle is travelling on an uphill slope is larger than the ratio of the braking force being applied to the rear wheel to the braking force being applied to the front wheel when the front-wheel braking operation element is being operated and the rear-wheel braking operation element is not being operated while the vehicle is travelling on a horizontal road surface.

Alternatively, the interlock braking apparatus is capable of controlling the braking force being applied to the front wheel and that being applied to the rear wheel in such a manner that a ratio of braking force being applied to the front wheel to the braking force being applied to the rear wheel when the rear-wheel braking operation element is being operated and the front-wheel braking operation element is not being operated while the vehicle is travelling on a downhill slope is larger than the ratio of the braking force being applied to the front wheel to the braking force being applied to the rear wheel when the rear-wheel braking operation element is being operated and the front-wheel braking operation element is not being operated while the vehicle is travelling on a horizontal road surface. In such implementations, the interlock braking apparatus is further capable of controlling the braking force being applied to the front wheel and that being applied to the rear wheel in such a manner that a ratio of braking force being applied to the front wheel to braking force being applied to the rear wheel when the rear-wheel braking operation element is being operated and the front-wheel braking operation element is not being operated while the vehicle is travelling on an uphill slope is smaller than the ratio of the braking force being applied to the front wheel to the braking force being applied to the rear wheel when the rear-wheel braking operation element is being operated and the front-wheel braking operation element is not being operated while the vehicle is travelling on a horizontal road surface.

When the leaning vehicle is travelling on an uphill slope, the load on the front wheel decreases and the load on the rear wheel increases compared with those found when the vehicle is travelling on a horizontal road surface. When the leaning vehicle is travelling on a downhill slope, the load on the front wheel increases and the load on the rear wheel decreases compared with those found when the vehicle is travelling on a horizontal road surface. In Arrangement 9, the interlock braking apparatus controls the braking force for the front wheel and that for the rear wheel so as to increase the ratio of the braking force being applied to that one of the front and rear wheels on which the load increases when the leaning vehicle is travelling on an uphill slope or downhill slope compared with the ratio found when the vehicle is travelling on a horizontal road surface.

### (Arrangement 10)

Starting from the leaning vehicle of any one of Arrangements 1 to 8, the interlock braking apparatus is capable of controlling the braking force being applied to the front wheel and that being applied to the rear wheel in such a manner that a ratio of braking force being applied to the rear wheel to braking force being applied to the front wheel when the front-wheel braking operation element is being operated and the rear-wheel braking operation element is not being operated while the vehicle is travelling on a downhill slope is larger than the ratio of the braking force being applied to the rear wheel to the braking force being applied to the front wheel when the front-wheel braking operation element is being operated and the rear-wheel braking operation element is not being operated while the vehicle is travelling on a horizontal road surface. In such implementations, the interlock braking apparatus is further capable of controlling the braking force being applied to the front wheel and that being applied to the rear wheel in such a manner that a ratio of braking force being applied to the rear wheel to braking force being applied to the front wheel when the front-wheel braking operation element is being operated and the rear-wheel braking operation element is not being operated while the vehicle is travelling on an uphill slope is smaller than the ratio of the braking force being applied to the rear wheel to the braking force being applied to the front wheel when the front-wheel braking operation element is being operated and the rear-wheel braking operation element is not being operated while the vehicle is travelling on a horizontal road surface.

Alternatively, the interlock braking apparatus is capable of controlling the braking force being applied to the front wheel and that being applied to the rear wheel in such a manner that a ratio of braking force being applied to the front wheel to braking force being applied to the rear wheel when the rear-wheel braking operation element is being operated and the front-wheel braking operation element is not being operated while the vehicle is travelling on a downhill slope is smaller than the ratio of the braking force being applied to the front wheel to the braking force being applied to the rear wheel when the rear-wheel braking operation element is being operated and the front-wheel braking operation element is not being operated while the vehicle is travelling on a horizontal road surface. In such implementations, the interlock braking apparatus is further capable of controlling the braking force being applied to the front wheel and that being applied to the rear wheel in such a manner that a ratio of braking force being applied to the front wheel to braking force being applied to the rear wheel when the rear-wheel braking operation element is being operated and the front-wheel braking operation element is not being operated while the vehicle is travelling on an uphill slope is larger than the ratio of the braking force being applied to the front wheel to the braking force being applied to the rear wheel when the rear-wheel braking operation element is being operated and the front-wheel braking operation element is not being operated while the vehicle is travelling on a horizontal road surface.

In Arrangement 10, the interlock braking apparatus controls the braking force being applied to the front wheel and that being applied to the rear wheel so as to decrease the ratio of the braking force being applied to that one of the front and rear wheels on which the load increases when the leaning vehicle is travelling on an uphill slope or downhill slope compared with that found when the vehicle is travelling on a horizontal road surface.

The interlock braking apparatus may control the braking force being applied to the other wheel in such a manner that the ratio of the braking force being applied to the other wheel to the braking force being applied to the one wheel while the vehicle is travelling on either a downhill slope or an uphill slope when at least one braking operation element of the front-wheel braking operation element and the rear-wheel braking operation element is being operated and the other braking operation element is not being operated is smaller than the ratio found while the vehicle is travelling on a road surface that is horizontal with respect to the front-rear direction of the vehicle.

The interlock braking apparatus may control the braking force being applied to the other wheel in such a manner that the ratio of the braking force being applied to the other wheel to the braking force being applied to the one wheel while the vehicle is travelling on either a downhill slope or an uphill slope when at least one braking operation element of the front-wheel braking operation element and the rear-wheel braking operation element is being operated and the other braking operation element is not being operated is larger than the ratio found while the vehicle is travelling on a road surface that is horizontal with respect to the front-rear direction of the vehicle.

### EFFECTS OF THE INVENTION

The present invention provides a leaning vehicle including a front-wheel braking operation element, a rear-wheel braking operation element, and an interlock braking apparatus with high degree of setting freedom.

### BRIEF DESCRIPTION OF THE DRAWINGS

[FIG. 1] FIG. 1 is a schematic side view of a motorcycle.
[FIG. 2] FIG. 2 is a schematic diagram of an interlock braking apparatus according to Embodiment 1.
[FIG. 3] FIG. 3 is a functional block diagram of the interlock braking apparatus of Embodiment 1.
[FIG. 4] FIG. 4 is a flow chart showing a procedure in which the interlock braking apparatus is controlled.
[FIG. 5] FIG. 5 is a functional block diagram of an interlock braking apparatus according to Embodiment 2.
[FIG. 6] FIG. 6 is a graph showing the relationship between vehicle-body velocity and assist magnification.
[FIG. 7] FIG. 7 illustrates how a leaning vehicle including an interlock braking apparatus may be operated.
[FIG. 8] FIG. 8 is a graph showing an example of a set of settings of the ratio between the braking force for the front wheel and that for the rear wheel of the interlock braking apparatus.

### EMBODIMENTS FOR CARRYING OUT THE INVENTION

### (Embodiment 1)

Embodiment 1 of the present invention will now be described with reference to the drawings. A motorcycle will be described as an example of the leaning vehicle of Embodiment 1. However, the leaning vehicle of the present invention is not limited to a motorcycle, and any number of front and rear wheels may be provided. For example, a vehicle with three or four wheels may be provided. In the following description, front/forward, rear(ward), left and right are directions with respect to the direction in which the motorcycle advances.

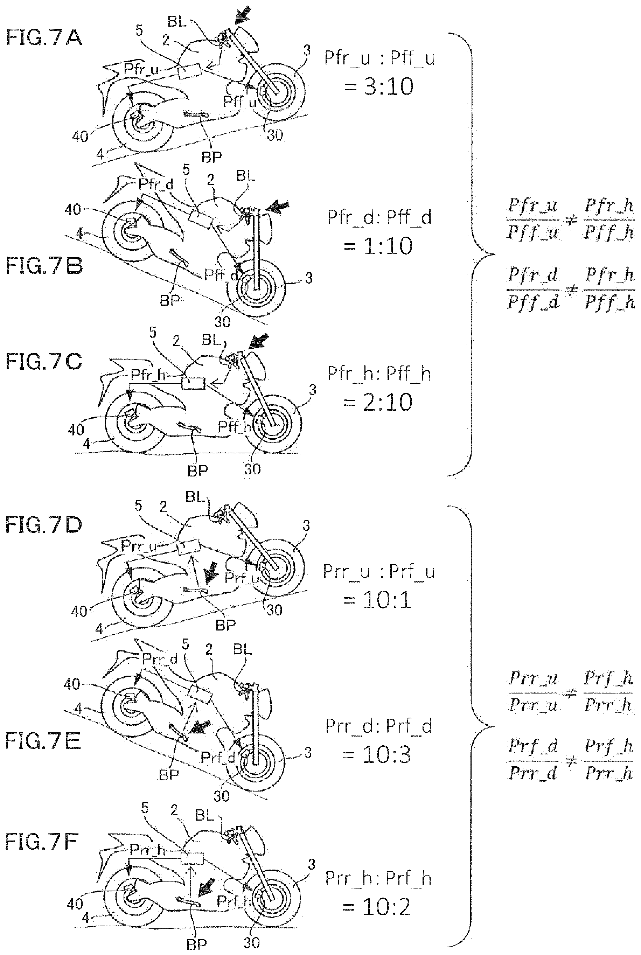

FIG. 7 illustrates a leaning vehicle according to the present embodiment. In the implementation shown in FIG. 7, the leaning vehicle includes a vehicle-body frame 2, a front wheel 3, a rear wheel 4, a front-wheel brake 30, a rear-wheel brake 40, a front-wheel braking operation element BL, a rear-wheel braking operation element BP, and an interlock braking apparatus 5. The interlock braking apparatus 5 performs at least one of the following actions: applying braking force not only to the front wheel 3 but also to the rear wheel 4 when the rider has operated the front-wheel braking operation element BL; and applying braking force not only to the rear wheel 4 but also to the front wheel 3 when the rider has operated the rear-wheel braking operation element BP.

FIG. 7(a) shows the front-wheel braking operation element BL being operated and the rear-wheel braking operation element BP not operated while the leaning vehicle is travelling on an uphill slope. FIG. 7(b) shows the front-wheel braking operation element BL being operated and the rear-wheel braking operation element BP not operated while the leaning vehicle is travelling on a downhill slope. FIG. 7(c) shows the front-wheel braking operation element BL being operated by the same amount and the rear-wheel braking operation element BP not operated while the leaning vehicle is travelling on a horizontal road surface. The interlock braking apparatus 5 controls the braking force being applied to the front wheel 3 and that being applied to the rear wheel 4 in such a manner that the ratio of the braking force being applied to the rear wheel 4 to the braking force being applied to the front wheel 3 while the vehicle is travelling as shown in FIG. 7(a) or 7(b), (Pfr_u/Pff_u, Pfr_d/Pff_d), is different from the ratio of the braking force Pfr_h being applied to the rear wheel 4 to the braking force Pff_h being applied to the front wheel 3 while the vehicle is travelling as shown in FIG. 7(c), (Pfr_h/Pff_h).

FIG. 7(d) shows the rear-wheel braking operation element BP being operated and the front-wheel braking operation element BL not operated while the leaning vehicle is travelling on an uphill slope. FIG. 7(e) shows the rear-wheel braking operation element BP being operated and the front-wheel braking operation element BL not operated while the leaning vehicle is travelling on a downhill slope. FIG. 7(f) shows the rear-wheel braking operation element BP being operated by the same amount and the front-wheel braking operation element BL not operated while the leaning vehicle is travelling on a horizontal road surface. The interlock braking apparatus 5 controls the braking force being applied to the front wheel 3 and that being applied to the rear wheel 4 in such a manner that the ratio of the braking force being applied to the front wheel 3 to the braking force being applied to the rear wheel 4 while the vehicle is travelling as shown in FIG. 7(d) or 7(e), (Prf_u/Prr_u, Prf_d/Prr_d), is different from the ratio of the braking force Prf_h being applied to the front wheel 3 to the braking force Prr_h being applied to the rear wheel 4 while the vehicle is travelling as shown in FIG. 7(f), (Prf_h/Prr_h).

The interlock braking apparatus 5 causes the ratio between the braking force for the front wheel 3 and the braking force for the rear wheel 4 found when only the front-wheel braking operation element BL or only the rear-wheel braking operation element BP is operated to vary depending on whether the road surface on which the leaning vehicle is travelling is horizontal or not. This allows the ratio between the braking force for the front wheel 3 and the braking force for the rear wheel 4 to be set to one value when the road surface is horizontal and to be set to another value when the road surface is an uphill slope or downhill slope. This will increase the degree of freedom with which the ratio between the braking force for the front wheel 3 and the braking force for the rear wheel 4 can be set by the interlock braking apparatus 5.

The ratio values shown in FIG. 7 are examples that may be used when the ratio is increased of the braking force for that wheel on which the load increases when the vehicle is on an uphill slope or downhill slope compared with that found when the vehicle is on a horizontal surface. That is, FIG. 7 shows examples that may be used when
Pfr_u/Pff_u>Pfr_h/Pff_h and
Pfr_d/Pff_d<Pfr_h/Pff_h,
or
Prf_u/Prr_u<Prf_h/Prr_h and
Prf_d/Prr_d>Prf_h/Prr_h.

The ratio values are not limited to the examples shown in FIG. 7. For example, it is possible to reduce the ratio of the braking force for that wheel on which the load increases when the vehicle is on an uphill slope or downhill slope compared with that found when the vehicle is on a horizontal surface. That is,
Pfr_u/Pff_u<Pfr_h/Pff_h and
Pfr_d/Pff_d>Pfr_h/Pff_h,
or
Prf_u/Prr_u>Prf_h/Prr_h and
Prf_d/Prr_d<Prf_h/Prr_h.

While the ratio for an uphill slope and the ratio for a downhill slope are different in the implementation shown in FIG. 7, the ratio for an uphill slope and the ratio for a downhill slope may be the same. That is,
Pfr_u/Pff_u=Pfr_d/Pff_d,
or
Prf_u/Prr_u=Prf_d/Prr_d.

Alternatively, in another implementation, the ratio settings for the interlock braking apparatus 5 may be
Pfr_u/Pff_u>Pfr_h/Pff_h and
Pfr_d/Pff_d>Pfr_h/Pff_h,
or
Prf_u/Prr_u<Prf_h/Prr_h and
Prf_d/Prr_d<Prf_h/Prr_h.

In still another implementation, the ratio settings for the interlock braking apparatus 5 may be
Pfr_u/Pff_u<Pfr_h/Pff_h and
Pfr_d/Pff_d<Pfr_h/Pff_h,
or
Prf_u/Prr_u>Prf_h/Prr_h and
Prf-d/Prr_d>Prf_h/Prr_h.

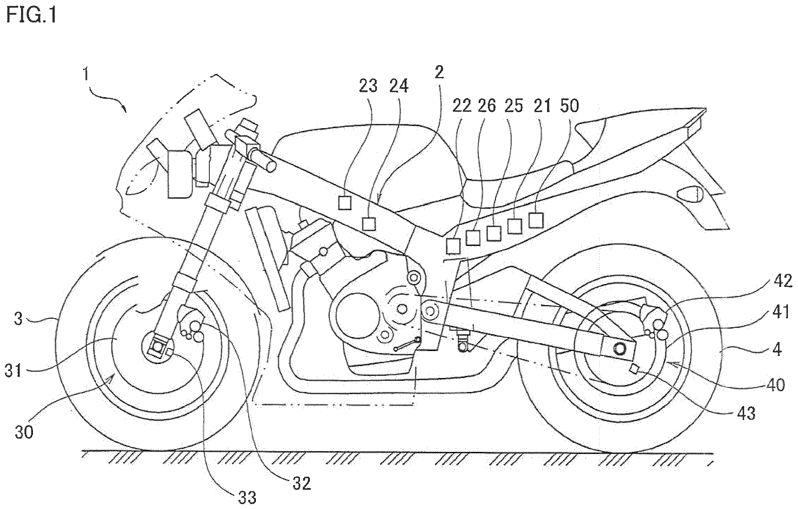

FIG. 1 is a schematic side view of a motorcycle including the interlock braking apparatus of Embodiment 1. The motorcycle 1 includes a vehicle-body frame 2, a front wheel 3 and a rear wheel 4. The front wheel 3 is provided with a front-wheel brake 30 for applying braking force to the front wheel 3. The rear wheel 4 is provided with a rear-wheel brake 40 for applying braking force to the rear wheel 4. The front-wheel brake 30 is a disc brake generally composed of a front-wheel brake disc 31 and a front-wheel brake caliper 32. The rear-wheel brake 40 is a disc brake generally composed of a rear-wheel brake disc 41 and a rear-wheel brake caliper 42.

The vehicle-body frame 2 is provided with an electronic control unit (ECU) 21 for controlling the operation of various parts of the motorcycle 1. The vehicle-body frame 2 is provided with a brake hydraulic-pressure control unit 50. At least portions portion of the brake hydraulic-pressure control unit 50 may be part of the ECU 21. The brake hydraulic-pressure control unit 50 controls the brake pressure for the front-wheel and rear-wheel brakes 30 and 40 depending on the operations of a brake lever and a brake pedal. The brake lever is an example of the front-wheel braking operation element. The brake pedal is an example of the rear-wheel braking operation element. The front wheel 3 is provided with a front-wheel wheel velocity sensor 33, while the rear wheel 4 is provided with a rear-wheel wheel velocity sensor 43.

Further, an inertial measurement unit (IMU) 22 is provided on the vehicle-body frame 2. The IMU 22 measures the acceleration and angular velocity of the vehicle. Further, on the vehicle-body frame 2 may be provided a gyro sensor 23, a longitudinal acceleration sensor 24, a vehicle-body velocity detection unit 25, a pitch angle detection unit 26, and other elements. The vehicle-body velocity detection unit 25 calculates the vehicle-body velocity of the motorcycle 1 based on the front-wheel wheel velocity detected by the front-wheel wheel velocity sensor 33 and the rear-wheel wheel velocity detected by the rear-wheel wheel velocity sensor 43. The pitch angle detection unit 26 receives the pitch rate of the motorcycle 1 from the gyro sensor 23. The pitch angle detection unit 26 detects the pitch angle of the motorcycle 1 based on this and other input values.

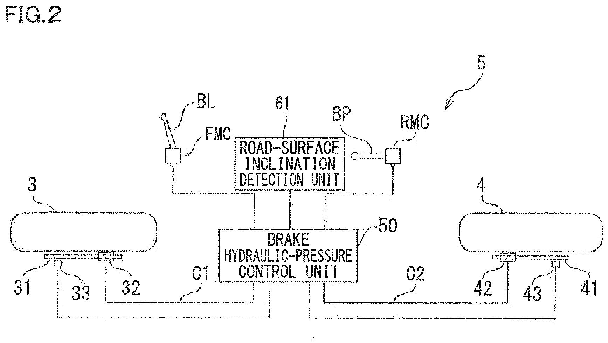

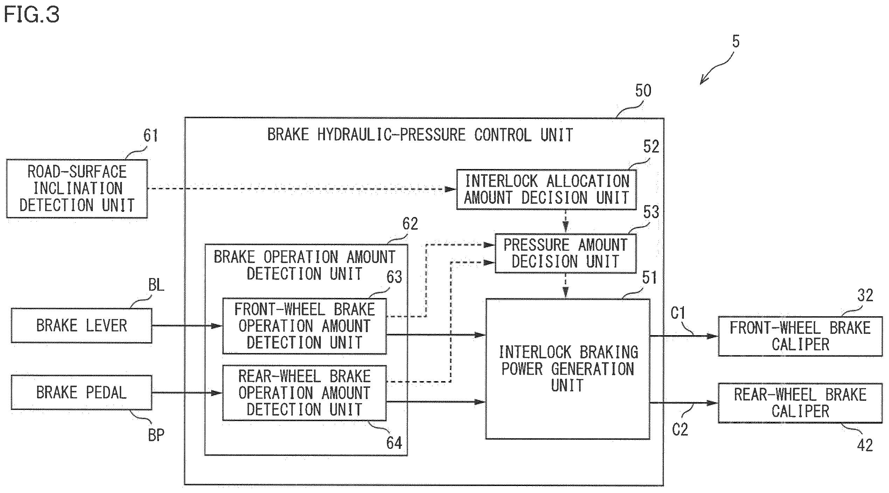

FIG. 2 schematically shows the configuration of the interlock braking apparatus 5. FIG. 3 shows a functional block diagram of the interlock braking apparatus 5. In FIG. 3, the hydraulic circuits are indicated by solid lines, while the electronic signal lines are indicated by broken lines.

When at least one of the front-wheel braking operation element and the rear-wheel braking operation element is being operated and the other braking operation element is not being operated, the interlock braking apparatus 5 applies braking force to both one wheel to which braking force is applied by an operation of the one braking operation element and the other wheel to which braking force is applied by an operation of the other braking operation element. In the implementation shown in FIG. 2, the interlock braking apparatus 5 applies braking force not only to the front wheel 3 but also to the rear wheel 4 when the brake lever BL (an example of the front-wheel braking operation element) is being operated and the brake pedal BP (an example of the rear-wheel braking operation element) is not being operated. Further, the interlock braking apparatus 5 applies braking force not only to the rear wheel 4 but also to the front wheel 3 when the brake pedal BP is being operated and the brake lever BL is not being operated.

The interlock braking apparatus 5 includes a brake lever BL and a front-wheel master cylinder FMC coupled to the brake lever BL. The brake lever BL is mounted on the right handle section of the motorcycle 1. In the front-wheel master cylinder FMC, a brake hydraulic pressure corresponding to the operation force applied to the brake lever BL by the rider is generated. The interlock braking apparatus 5 includes a brake pedal BP and a rear-wheel master cylinder RMC coupled to the brake pedal BP. The brake pedal BP is mounted on the right pedal of the motorcycle 1. In the rear-wheel master cylinder RMC, a brake hydraulic pressure corresponding to the operation power applied to the brake pedal BP by the rider is generated.

The interlock braking apparatus 5 includes the brake hydraulic-pressure control unit 50. The interlock braking apparatus 5 includes a front-wheel brake hydraulic circuit C1 and a rear-wheel brake hydraulic circuit C2. The front-wheel brake hydraulic circuit C1 connects the front-wheel brake caliper 32 for the front wheel 3 with the brake hydraulic-pressure control unit 50. The rear-wheel brake hydraulic circuit C2 connects the rear-wheel brake caliper 42 for the rear wheel 4 with the brake hydraulic-pressure control unit 50.

The interlock braking apparatus 5 includes a road-surface inclination detection unit 61 for detecting the inclination status of the road surface on which the vehicle is travelling with respect to the front-rear direction of the vehicle. Specifically, the inclination status of the road surface with respect to the front-rear direction of the vehicle is the inclination angle of the road surface with respect to the front-rear direction of the vehicle. In the present embodiment, the road-surface inclination detection unit 61 is the IMU 22 discussed above. The inclination angle of the road surface with respect to the front-rear direction of the vehicle can be estimated from position information obtained by the IMU 22. Instead of the IMU 22, the road-surface inclination detection unit 61 may be the pitch angle detection unit 26, an inclination switch, a camera, a sensor, the GPS, or the like.

The interlock braking apparatus 5 includes a brake operation amount detection unit 62 for detecting operation amounts of the braking operation elements. The brake operation amount detection unit 62 includes a front-wheel brake operation amount detection unit 63 for detecting the operation amount of the brake lever BL and the rear-wheel brake operation amount direction unit 64 for detecting the operation amount of the brake pedal BP. The front-wheel brake operation amount detection unit 63 may be a pressure sensor that detects the hydraulic pressure in the front-wheel master cylinder FMC, for example. The rear-wheel brake operation amount detection unit 64 may be a pressure sensor that detects the hydraulic pressure in the rear-wheel master cylinder RMC, for example.

The brake hydraulic-pressure control unit 50 includes an interlock braking force generation unit 51. Depending on the inclination status of the road surface with respect to the front-rear direction of the vehicle and the operation amount of one braking operation element obtained by the road-surface inclination detection unit 61 and brake operation amount detection unit 62, the interlock braking force generation unit 51 generates braking force to be applied to the other wheel (referred to as "interlock braking force"). More specifically, the interlock braking force generation unit 51 generates interlock braking force to be applied to the rear wheel 4 depending on the inclination status of the road surface with respect to the front-rear direction of the vehicle obtained by the road-surface inclination detection unit 61 and the operation amount of the brake lever BL obtained by the front-wheel brake operation amount detection unit 63. Further, the interlock braking force generation unit 51 generates interlock braking force to be applied to the front wheel 3 depending on the inclination status of the road surface with respect to the front-rear direction of the vehicle obtained by the road-surface inclination detection unit 61 and the operation amount of the brake pedal BP obtained by the rear-wheel brake operation amount detection unit 64. Furthermore, when the brake lever BL is operated, the interlock braking force generation unit 51 applies to the front wheel 3 braking force that depends on the operation amount of the brake lever BL. When the brake pedal BP is operated, the interlock braking force generation unit 51 applies to the rear wheel 4 braking force that depends on the operation amount of the brake pedal BP.

The brake hydraulic-pressure control unit 50 includes an interlock allocation amount decision unit 52. The interlock allocation amount decision unit 52 decides on the allocation (or ratio) of braking force to be applied to the front wheel 3 and the rear wheel 4 depending on the inclination angle of the road surface with respect to the front-rear direction of the vehicle. The interlock allocation amount decision unit 52 stores in advance a map indicating the relationship between inclination angle and the allocation of braking force, and obtains the allocation of braking force corresponding to the inclination angle of the road surface with respect to the front-rear direction of the vehicle obtained by the road-surface inclination detection unit 61.

The allocation of braking force by the interlock allocation amount decision unit 52 will be described. The interlock allocation amount decision unit 52 decides on such an allocation that, if only the brake lever BL is operated and the brake pedal BP is not operated while the vehicle is travelling on a downhill slope, the interlock braking force applied to the rear wheel 4 is weakened compared with that found while the vehicle is travelling on a horizontal road surface. If only the brake pedal BP is operated and the brake lever BL is not operated while the vehicle is travelling on a downhill slope, the interlock allocation amount decision unit 52 decides on such an allocation that the interlock braking force applied to the front wheel 3 is strengthened compared with that found while the vehicle is travelling on a horizontal road surface. Further, the interlock allocation amount decision unit 52 decides on such an allocation that, if only the brake lever BL is operated and the brake pedal BP is not operated while the vehicle is travelling on an uphill slope, the interlock braking force applied to the rear wheel 4 is strengthened compared with that found while the vehicle is travelling on a horizontal road surface. If only the brake pedal BP is operated and the brake lever BL is not operated while the vehicle is travelling on an uphill slope, the interlock allocation amount decision unit 52 decides on such an allocation that the interlock braking force applied to the front wheel 3 is weakened compared with that found while the vehicle is travelling on a horizontal road surface.

For example, while the vehicle is travelling on a horizontal road surface and if only the brake lever BL is operated, the ratio between the braking force applied to the front wheel 3 and the interlock braking force applied to the rear wheel 4 may be 10:2. In this arrangement, while the vehicle is travelling on a downhill slope with an inclination angle and if only the brake lever BL is operated, the ratio between the braking force applied to the front wheel 3 and the interlock braking force applied to the rear wheel 4 may be 10:1. When the vehicle is travelling on a downhill slope, the load applied to the rear wheel 4 is smaller than when the vehicle is travelling on a horizontal road surface. As the interlock braking force applied to the rear wheel 4 when the vehicle is travelling on a downhill slope is smaller than when the vehicle is travelling on a horizontal road surface, the braking force for the rear wheel 4, on which the load is reduced, is smaller. In this arrangement, for example, if only the brake lever BL is operated while the vehicle is travelling on an uphill slope with an inclination angle, the ratio between the braking force applied to the front wheel 3 and the interlock braking force applied to the rear wheel 4 may be 10:3. When the vehicle is travelling on an uphill slope, the load applied to the rear wheel 4 is larger than when the vehicle is travelling on a horizontal road surface. As the interlock braking force applied to the rear wheel 4 when the vehicle is travelling on an uphill slope is larger than when the vehicle is travelling on a horizontal road surface, the braking force for the rear wheel 4, on which the load is increased, is larger.

The brake hydraulic-pressure control unit 50 includes a pressure amount decision unit 53. The pressure amount decision unit 53 decides on pressure amounts that will actually be applied to the front-wheel brake caliper 32 and rear-wheel brake caliper 42 depending on the allocation of braking force decided on by the interlock allocation amount decision unit 52 and the operation amounts of the braking operation elements obtained by the brake operation amount detection unit 62. The pressure amounts decided on by the pressure amount decision unit 53 are applied by the interlock braking force generation unit 51 to the front-wheel brake caliper 32 and rear-wheel brake caliper 42 via the front-wheel brake hydraulic circuit C1 and rear-wheel brake hydraulic circuit C2.

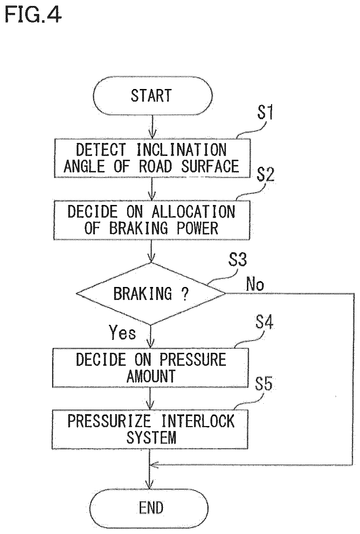

How the interlock braking apparatus 5 is controlled will now be described with reference to FIG. 4. FIG. 4 is a flow chart showing a procedure in which the interlock braking apparatus 5 is controlled.

First, as shown in FIG. 4, the road-surface inclination detection unit 61 detects the inclination angle of the road surface with respect to the front-rear direction of the vehicle (step S1).

Subsequently, as shown in FIG. 4, the interlock allocation amount decision unit 52 decides on the allocation of braking force to be applied to the front and rear wheels 3 and 4 depending on the inclination angle of the road surface with respect to the front-rear direction of the vehicle (step S2).

Subsequently, it is determined whether braking is occurring in response to the rider only operating one braking operation element (step S3). If the rider is operating both braking operation elements, or if the rider is operating none of the braking operation elements, the process ends.

If the rider is only operating one braking operation element, the pressure amount decision unit 53 decides on pressure amounts that will actually be applied to the front wheel and rear-wheel brake calipers 32 and 42 depending on the allocation of braking force decided on by the interlock allocation amount decision unit 52 and the operation amounts of the braking operation elements obtained by the brake operation amount detection unit 62 (step S4).

Finally, the interlock braking force generation unit 51 applies the pressure amounts decided on by the pressure amount decision unit 53 to the front-wheel and rear-wheel brake calipers 32 and 42 (step S5).

### (Embodiment 2)

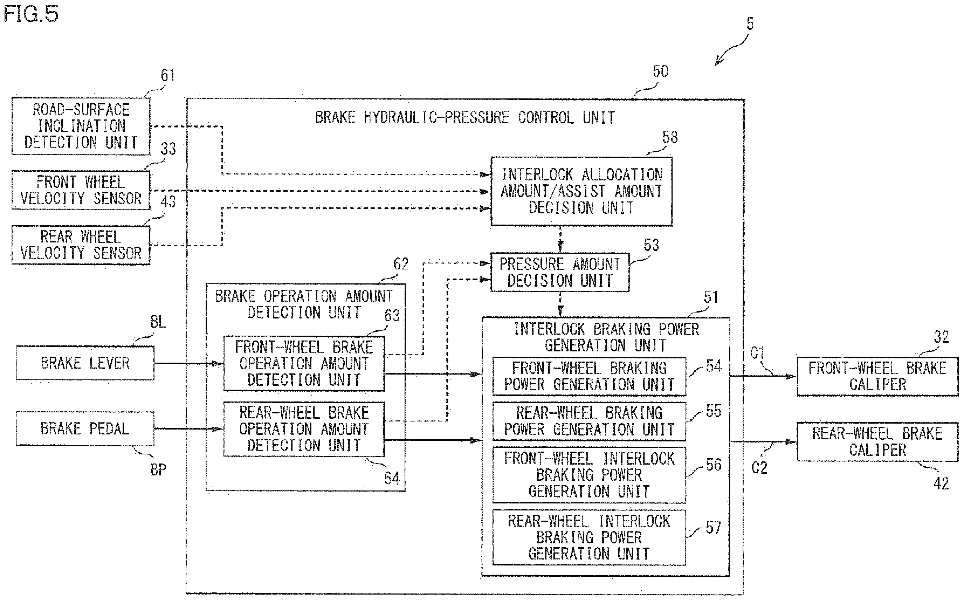

FIG. 5 is a functional black diagram of an interlock braking apparatus 5 according to Embodiment 2. In this implementation, the brake hydraulic-pressure control unit 50 includes an interlock braking force generation unit 51, and the interlock braking force generation unit 51 includes a front-wheel braking force generation unit 54, a rear-wheel braking force generation unit 55, a front-wheel interlock braking force generation unit 56, and a rear-wheel interlock braking force generation unit 57.

The front-wheel braking force generation unit 54 generates the braking force to be applied to the front wheel by pressurizing the front-wheel brake caliper 32 depending on the operation amount of the brake lever BL obtained by the front-wheel brake operation amount detection unit 63. Further, the front-wheel braking force generation unit 54 is capable of generating the braking force to be applied to the front wheel 3 by pressurizing the front-wheel brake caliper 32 depending on the inclination status of the road surface with respect to the front-rear direction of the vehicle obtained by the road-surface inclination detection unit 61.

The rear-wheel braking force generation unit 55 generates the braking force to be applied to the rear wheel 4 by pressurizing the rear-wheel brake caliper 42 depending on the operation amount of the brake pedal BP obtained by the rear-wheel brake operation amount detection unit 64. Further, the rear-wheel braking force generation unit 55 is capable of generating the braking force to be applied to the rear wheel 4 by pressurizing the rear-wheel brake caliper 42 depending on the inclination status of the road surface with respect to the front-rear direction of the vehicle obtained by the road-surface inclination detection unit 61.

The front-wheel interlock braking force generation unit 56 generates the interlock braking force to be applied to the front wheel 3 by pressurizing the front-wheel brake caliper 32 based on the inclination status of the road surface with respect to the front-rear direction of the vehicle obtained by the road-surface inclination detection unit 61 and the operation amount of the brake pedal BP obtained by the rear-wheel brake operation amount detection unit 64. The rear-wheel interlock braking force generation unit 57 generates the interlock braking force to be applied to the rear wheel 4 by pressurizing the rear-wheel brake caliper 42 based on the inclination status of the road surface with respect to the front-rear direction of the vehicle obtained by the road-surface inclination detection unit 61 and the operation amount of the brake lever BL obtained by the front-wheel brake operation amount detection unit 63.

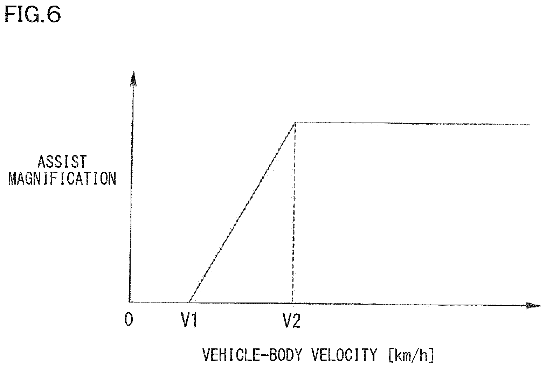

The brake hydraulic-pressure control unit 50 may have the function of applying, to the front and rear wheels 3 and 4, more braking force than the braking force corresponding to the operation amounts of the brake lever BL and brake pedal BP, i.e. power assist function. Power assisting is performed based on the inclination status of the road surface with respect to the front-rear direction of the vehicle and the vehicle-body velocity, for example. The inclination status of the road surface with respect to the front-rear direction of the vehicle is detected by the road-surface inclination detection unit 61. The vehicle-body velocity is calculated based on the front-wheel wheel velocity detected by the front-wheel wheel velocity sensor 33 and the rear-wheel wheel velocity detected by the rear-wheel wheel velocity sensor 43. During power assisting, the assist magnification may be changed, for example, depending on the value-body velocity, as shown in FIG. 6. Power assisting is not performed while the vehicle-body velocity is in the section between 0 and V1. While the vehicle-body velocity is in the section between V1 and V2, the assist magnification is increased depending on the vehicle-body velocity toward a predetermined assist ratio. While the vehicle-body velocity is in the section of V2 and more, the assist magnification is fixed. The assist magnification is decided on by the interlock allocation amount/assist amount decision unit 58.

In the above-illustrated embodiment, the interlock braking apparatus applies braking force to both the front and rear wheels in response to an operation of the front-wheel braking operation element only and applies braking force to both the front and rear wheels in response to an operation of the rear-wheel braking operation element only. The interlock braking apparatus may configured to apply braking force to both the front and rear wheels when only one of the front-wheel braking operation element and rear-wheel braking operation element has been operated, and to apply braking force to one of the front and rear wheels when only the other one of the front-wheel braking operation element and rear-wheel braking operation element has been operated.

The interlock braking apparatus is not limited to implementations where, while the leaning vehicle is travelling on an uphill slope or downhill slope, the ratio between the braking force for the front wheel and that for the rear wheel of the interlock brake is always different from the ratio during horizontal travel. For example, in the interlock braking apparatus, the ratio between the braking force for the front wheel and that for the rear wheel found when the front-wheel braking operation element is being operated and the rear-wheel braking operation element is not being operated during part of the time period during which the leaning vehicle is travelling on an uphill slope or downhill slope may be different from the ratio during horizontal travel. As an example, if the inclination of an uphill slope or downhill slope exceeds a threshold, the ratio between the braking force for the front wheel and that for the rear wheel found when the front-wheel braking operation element is being operated and the rear-wheel braking operation element is not being operated may be different from the ratio during horizontal travel. Thus, while the leaning vehicle is travelling on an uphill slope or downhill slope and if another predetermined condition is met, the ratio between the braking force for the front wheel and that for the rear wheel found when the interlock brake is actuated by a front-wheel brake operation may be different from that during horizontal travel. Alternatively, in the interlock braking apparatus, during part of the time period during which the leaning vehicle is travelling on an uphill slope or downhill slope, the ratio between braking force for the front wheel and that for the rear wheel found when the rear-wheel braking operation element is being operated and the front-wheel braking operation element is not being operated may be different from the ratio during horizontal travel. As an example, if the inclination of an uphill slope or downhill slope exceeds a threshold, the ratio between the braking force for the front wheel and that for the rear wheel found when the rear-wheel braking operation element is being operated and the front-wheel braking operation element is not being operated may be different from the ratio during horizontal travel. Thus, while the leaning vehicle is travelling on an uphill slope or downhill slope and another predetermined condition is met, the ratio between the braking force for the front wheel and that for the rear wheel found when the interlock brake is actuated by a rear-wheel brake operation may be different from that during horizontal travel.

The interlock braking apparatus may control the braking force being applied to the front wheel and that being applied to the rear wheel in such a manner that the ratio of the braking force being applied to the rear wheel to the braking force applied to the front wheel when the front-wheel braking operation element is being operated by a first operation amount and the rear-wheel braking operation element is not being operated while the vehicle is travelling on a downhill slope or uphill slope is different from the ratio of the braking force being applied to the rear wheel to the braking force being applied to the front wheel when the front-wheel braking operation element is being operated by the first operation amount and the rear-wheel braking operation element is not being operated while the vehicle is travelling on a horizontal road surface. Alternatively, the interlock braking apparatus may control the braking force being applied to the front wheel and that being applied to the rear wheel in such a manner that the ratio of the braking force being applied to the front wheel to the braking force being applied to the rear wheel when the rear-wheel braking operation element is being operated by a first operation amount and the front-wheel braking operation element is not being operated while the vehicle is travelling on a downhill slope or an uphill slope is different from the ratio of the braking force being applied to the front wheel to the braking force being applied to the rear wheel when the rear-wheel braking operation element is being operated by the first operation amount and the front-wheel braking operation element is not being operated while the vehicle is travelling on a horizontal road surface. The first operation amount may be any operation amount within the entire operation-amount range within which the braking operation elements can fall. Alternatively, the first operation amount may be any operation amount within a portion of the operation-amount range within which the braking operation elements can fall.

That is, the interlock braking apparatus may control the braking force being applied to the front wheel and that being applied to the rear wheel in such a manner that the ratio between the braking force for the front wheel and that for the rear wheel found when the front-wheel braking operation element is being operated by the same amount and the rear-wheel braking operation element is not being operated varies depending on whether the vehicle is travelling on a downhill slope or uphill slope or the vehicle is travelling on a horizontal road surface. In other words, the ratio of the braking force for the front wheel and that for the rear wheel produced by the operation amount of the front-wheel braking operation element may vary depending on the inclination of the road surface on which the vehicle is travelling with respect to the front-rear direction. Alternatively, the interlock braking apparatus may control the braking force being applied to the front wheel and that being applied to the rear wheel in such a manner that the ratio between the braking force for the front wheel and that for the rear wheel found when the rear-wheel braking operation element is being operated by the same amount and the front-wheel braking operation element is not being operated varies depending on whether the vehicle is travelling on a downhill slope or uphill slope or the vehicle is travelling on a horizontal road surface. In other words, the ratio between the braking force for the front wheel and that for the rear wheel produced by the operation amount of the rear-wheel braking operation element may vary depending on the inclination of the road surface on which the vehicle is travelling with respect to the front-rear direction.

The interlock braking apparatus may adjust the ratio between the braking force for the front wheel and the braking force for the rear wheel in the interlock brake based on other factors of the inclination status of the road surface on which the leaning vehicle is travelling. For example, the interlock braking apparatus may vary the ratio between the braking force applied to the front wheel and the braking force applied to the rear wheel depending on the braking force applied to the front wheel.

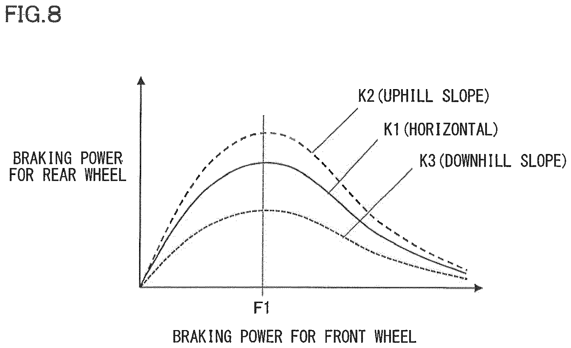

FIG. 8 is a graph showing an example of a set of settings where the ratio between the braking force applied to the front wheel and the braking force applied to the rear wheel is varied depending on the braking force applied to the front wheel. In FIG. 8, the horizontal axis represents the braking force for the front wheel, while the vertical axis represents the braking force for the rear wheel. The braking force for the front wheel and the braking force for the rear wheel may be detected by determining the hydraulic pressure of the front wheel and the hydraulic pressure of the rear-wheel brake, for example. In the example shown in FIG. 8, the curve K1 represents the relationship between the braking force for the front wheel and the braking force for the rear wheel found when the front-wheel braking operation element is being operated and the rear-wheel braking operation element is not being operated while the leaning vehicle is travelling on a horizontal road surface. The curve K2 represents the relationship between the braking force for the front wheel and the braking force for the rear wheel found when the front-wheel braking operation element is being operated and the rear-wheel braking operation element is not being operated while the leaning vehicle is travelling on an uphill slope. The curve K3 represents the relationship between the braking force for the front wheel and the braking force for the rear wheel found when the front-wheel braking operation element is being operated and the rear-wheel braking operation element is not being operated while the leaning vehicle is travelling on a downhill slope.

In the example shown in FIG. 8, the interlock braking apparatus varies the ratio between the braking force for the front wheel and that for the rear wheel upon operation of the interlock brake depending on the braking force for the front-wheel brake. Further, the interlock braking apparatus varies the ratio between the braking force for the front wheel and the braking force for the rear wheel upon operation of the interlock brake depending on whether the leaning vehicle is travelling on an uphill slope or travelling on a downhill slope or the vehicle is travelling on a horizontal road surface. For example, it is assumed that braking force F1 is applied to the front wheel when the front-wheel braking operation element is being operated and the rear-wheel braking operation element is not being operated. The ratio between the braking force for the front wheel and that for the rear wheel found when the braking force F1 is applied to the front wheel while the leaning vehicle is travelling on an uphill slope or a downhill slope is different from the ratio between the braking force for the front wheel and that for the rear wheel found when the same braking force F1 is applied to the front wheel while the leaning vehicle is travelling on a horizontal road surface.

In the example shown in FIG. 8, the interlock braking apparatus controls the braking force being applied to the front wheel and that being applied to the rear wheel in such a manner that the ratio of the braking force being applied to the rear wheel to the braking force being applied to the front wheel when the front-wheel braking operation element is being operated and the rear-wheel braking operation element is not being operated while the leaning vehicle is travelling on a downhill slope is smaller than the ratio of the braking force being applied to the rear wheel to the braking force being applied to the front wheel when the front-wheel braking operation element is being operated by the same amount and the rear-wheel braking operation element is not being operated while the leaning vehicle is travelling on a horizontal road surface. Further, the interlock braking apparatus controls the braking force being applied to the front wheel and that being applied to the rear wheel in such a manner that the ratio of the braking force being applied to the rear wheel to the braking force being applied to the front wheel when the front-wheel braking operation element is being operated by and the rear-wheel braking operation element is not being operated while the leaning vehicle is travelling on an uphill slope is larger than the ratio of the braking force being applied to the rear wheel to the braking force being applied to the front wheel when the front-wheel braking operation element is being operated by the same amount and the rear-wheel braking operation element is not being operated while the leaning vehicle is travelling on a horizontal road surface.

The settings of the ratio between the front and rear wheels is not limited to the example shown in FIG. 8. In the example shown in FIG. 8, the ratio varies depending on the braking force for the front wheel within the entire range within which the braking force for the front wheel can fall. Alternatively, the ratio may vary depending on the braking force for the front wheel within part of the range within which the braking force for the front wheel can fall. Alternatively, for part of the range within which the braking force for the front wheel can fall, the ratio found when the leaning vehicle is travelling on an uphill slope or downhill slope may be different from the ratio found when the vehicle is travelling on a horizontal surface.

The example shown in FIG. 8 involves settings of the ratio in the interlock brake found when the front-wheel braking operation element has been operated. With some settings, the ratio between the braking force for the front wheel and that for the rear wheel of the interlock brake found when the rear-wheel braking operation element has been operated may vary depending on the braking force for the rear wheel.

The settings for the interlock braking apparatus are not limited to the ratio between the braking force for the front wheel and that for the rear wheel during operation of the interlock brake. For example, the timing with which braking force is applied to the front wheel during operation of the interlock brake and the timing with which braking force is applied to the rear wheel may be included in the settings for the interlock braking apparatus. For example, the magnitude of the gap between the time point at which braking force is applied to the rear wheel and the time point at which braking force is applied to the front wheel when the rear-wheel braking operation element has been operated may be set.

The settings for the interlock braking apparatus are decided on depending on the type of the leaning vehicle, for example. The type of the leaning vehicle is determined by the size, weight and riding position of the vehicle, for example. Types of the leaning vehicle include scooters and sport bikes, for example.

As discussed above, the road-surface inclination detection unit is not limited to an IMU. The road-surface inclination detection unit may be configured to detect the inclination of the road surface, or estimate the inclination of the road surface based on information obtained by sensors or the like. For example, the road-surface inclination detection unit may be a sensor using a spindle, or may obtain inclination information about the road using navigation information providing information relating to the road on which the leaning vehicle is travelling, or may estimate the inclination of the road by processing images captured by a car camera recorder, or may estimate the inclination of the road surface from the relationship between the acceleration in the direction in which the leaning vehicle is advancing and engine output (for example, torque). Alternatively, the road-surface inclination detection unit may estimate the inclination angle of the road, or determine whether the road surface is up, down or horizontal. The inclination of the road surface with respect to the front-rear direction of the vehicle is the inclination of the road surface relative to the direction in which the leaning vehicle is advancing.

The front-wheel brake operation amount detection unit and rear-wheel brake operation amount detection unit may detect the operation amount based on physical quantities that vary as the rider operates the operation elements. Physical quantities that vary as the rider operate the operation elements include, for example, the force from the operation input by the rider or how it changes over time, the pressure produced by the operation, and the displacement of parts such as the operation elements or cylinders due to the operation or how it changes over time.

The braking force for the front wheel and the braking force for the rear wheel may be detected based on the hydraulic pressure of the front-wheel brake and the hydraulic pressure of the rear-wheel brake, for example. Further, the braking force for the front wheel and the braking force for the rear wheel may be controlled by controlling the hydraulic pressure of the front-wheel brake and the hydraulic pressure of the rear-wheel brake. The hydraulic pressure of the front-wheel brake and the hydraulic pressure of the rear-wheel brake may be, for example, the hydraulic pressure of the wheel cylinder connected to the front-wheel brake caliper, and the hydraulic pressure of the wheel cylinder connected to the rear-wheel brake caliper. The interlock braking apparatus may control the ratio between the braking force for the front wheel and the braking force for the rear wheel by controlling the ratio between the brake hydraulic pressure of the wheel cylinder of the front-wheel brake and the brake hydraulic pressure of the wheel cylinder of the rear-wheel brake.

The construction of the front-wheel brake and rear-wheel brake are not limited to particular ones. The front-wheel brake hydraulic circuit and rear-wheel brake hydraulic circuit are not limited to particular ones. The fluid channel between the front-wheel braking operation element and front-wheel brake and the fluid channel between the rear-wheel braking operation element and rear-wheel brake may be separate from each other, or may be connected. The fluid channel between the front-wheel braking operation element and front-wheel brake or the fluid channel between the rear-wheel braking operation element and rear-wheel brake may be configured to be switchable between communicated and disconnected states.

The interlock braking apparatus may be configured such that a hydraulic pressure produced by an operation of the front wheel or rear-wheel braking operation element is distributed among the front-wheel and rear-wheel brakes. The interlock braking apparatus may have a configuration that uses a pump using a motor or the like to increase the hydraulic pressure of the front-wheel or rear-wheel brake. For example, the interlock braking apparatus may include a servo unit (or booster) for increasing the hydraulic pressure of at least one of the front-wheel and rear-wheel brakes.

The interlock braking apparatus may be configured such that, for example, while the fluid channel between the front-wheel braking operation element and front-wheel brake is not in a communicating state, the operation amount of the front-wheel braking operation element is detected and the hydraulic pressure for the front-wheel brake and the hydraulic pressure for the rear-wheel brake are controlled based on the detected operation amount.

The front-wheel braking force generation unit for generating braking force to be applied to the front wheel based on the operation amount of the front-wheel braking operation element may be configured to transfer a hydraulic pressure produced by an operation of the front-wheel braking operation element to the front-wheel brake, for example. In such implementations, the fluid channel between the front-wheel braking operation element and the front-wheel brake is in a communicating state. Alternatively, the front-wheel braking force generation unit may be configured to generate, separately from the hydraulic pressure produced by an operation of the front-wheel braking operation element, a hydraulic pressure corresponding to the operation amount for the front-wheel brake. In such implementations, the fluid channel between the front-wheel braking operation element and front-wheel brake may be in a communicating state, or may be in a non-communicating state.

The rear-wheel braking force generation unit for generating braking force to be applied to the rear wheel based on the operation amount of the rear-wheel braking operation element may be configured to transfer a hydraulic pressure produced by an operation of the rear-wheel braking operation element to the rear-wheel brake, for example. In such implementations, the fluid channel between the rear-wheel braking operation element and the rear-wheel brake is in a communicating state. Alternatively, the rear-wheel braking force generation unit may be configured to generate, separately from the hydraulic pressure produced by an operation of the rear-wheel braking operation element, a hydraulic pressure corresponding to the operation amount for the rear-wheel brake. In such implementations, the fluid channel between the rear-wheel braking operation element and rear-wheel brake may be in a communicating state, or may be in a non-communicating state.

The rear-wheel interlock braking force generation unit for generating braking force to be applied to the rear wheel based on the operation amount of the front-wheel braking operation element may be configured to transfer a hydraulic pressure produced by an operation of the front-wheel braking operation element to the rear-wheel brake, for example. In such implementations, the fluid channel between the front-wheel braking operation element and the rear-wheel brake is in a communicating state. Alternatively, the rear-wheel interlock braking force generation unit may be configured to generate, separately from the hydraulic pressure produced by an operation of the front-wheel braking operation element, a hydraulic pressure corresponding to the operation amount for the rear-wheel brake. In such implementations, the fluid channel between the front-wheel braking operation element and rear-wheel brake may be in a communicating state, or may be in a non-communicating state.

The front-wheel interlock braking force generation unit for generating braking force to be applied to the front wheel based on the operation amount of the rear-wheel braking operation element may be configured to transfer a hydraulic pressure produced by an operation of the rear-wheel braking operation element to the front-wheel brake, for example. In such implementations, the fluid channel between the rear-wheel braking operation element and the front-wheel brake is in a communicating state. Alternatively, the front-wheel interlock braking force generation unit may be configured to generate, separately from the hydraulic pressure produced by an operation of the rear-wheel braking operation element, a hydraulic pressure corresponding to the operation amount for the front-wheel brake. In such implementations, the fluid channel between the rear-wheel braking operation element and front-wheel brake may be in a communicating state, or may be in a non-communicating state.

The front-wheel interlock braking force generation unit may generate braking force to be applied to the front wheel depending on the inclination status of the road surface with respect to the front-rear direction of the vehicle obtained by the road-surface inclination detection unit. Alternatively, the rear-wheel interlock braking force generation unit may generate braking force to be applied to the rear wheel depending on the inclination status of the road surface with respect to the front-rear direction of the vehicle obtained by the road-surface inclination detection unit.

In the leaning vehicle, the front and rear wheels are inclined to the left of the vehicle when the vehicle is turning to the left, and is inclined to the right of the vehicle when the vehicle is turning to the right.

The interlock braking apparatus may store in advance data or a program that indicate ratios between the braking force for the front wheel and that for the rear wheel upon interlock-brake operation. The interlock braking apparatus may use the stored data or program to decide on a ratio between the braking force for the front wheel and that for the rear wheel. For example, the storage medium of the interlock braking apparatus may store in advance a map, an arithmetic expression table, a program or other data indicating the correspondence between the ratio of the braking force for the front wheel and that for the rear wheel, on the one hand, and the inclination status of the road surface on which the leaning vehicle is travelling, on the other hand. The interlock braking apparatus may include a computer having a processor and memory. In such implementations, the interlock braking apparatus may decide on braking force for the front and rear wheels using the stored data or a program. In such implementations, the computer of the interlock braking apparatus may be constructed from the computer of the ECU. Alternatively, the interlock braking apparatus may include circuitry for deciding on braking force for the front and rear wheels based on the inclination status of the road surface and the operation amounts of the braking operation elements.

In the implementation shown in FIG. 4, the interlock brake decides on an allocation for the front and rear wheels depending on the inclination angle of the road surface, and, depending on the detected front-wheel or rear-wheel brake operation amount, decides on a pressure amount for the front-wheel brake and a pressure amount for the rear-wheel brake. The interlock braking apparatus does not necessarily calculate the ratio between the braking force for the front wheel and that for the rear wheel. For example, the interlock brake may be configured to decide on the braking force for the front wheel and the braking force for the rear wheel based on the inclination status of the road surface and the operation amount of the front-wheel or the rear-wheel braking operation element. The braking force for the front wheel decided on by the interlock brake may be the pressure amount for the front-wheel brake or the brake hydraulic pressure, for example. The braking force for the rear wheel decided on by the interlock brake may be the pressure amount for the rear-wheel brake or the brake hydraulic pressure, for example.

Alternatively, the interlock braking apparatus may be configured to mechanically switch the ratio between the brake hydraulic pressure applied to the front wheel and the brake hydraulic pressure applied to the rear wheel when the front-wheel braking operation element has been operated, depending on the inclination status of the road surface. The interlock braking apparatus may be configured to mechanically switch the ratio between the brake hydraulic pressure applied to the front wheel and the brake hydraulic pressure applied to the rear wheel when the rear-wheel braking operation element has been operated, depending on the inclination status of the road surface.

The vehicle-body frame is a member for receiving stresses acting on the leaning vehicle during travel. For example, examples of the vehicle-body frame include a monocoque (stress skin construction), semi-monocoque, or a construction where vehicle parts also serve to receive stresses. For example, parts such as the engine or air cleaner may form part of the vehicle-body frame.

The leaning vehicle may include a bar handle configured to be capable of changing the direction of the front wheel. At least one of the front-wheel and rear-wheel braking operation elements is provided on the bar handle. The bar handle includes a bar extending in the left-right direction of the leaning vehicle and rotatably supported on the vehicle-body frame. The bar of the bar handle may be composed of a single bar, or may be composed of two bars, to the left and right, connected to each other. For example, the left and right bars of the bar handle may be separate parts. That is, the bar handle may be a separate handle. A left grip is provided on the left end of the bar of the bar handle. A right grip is provided on the right end of the bar. The bar handle may swing in a range of 180 degrees (i.e. half rotation) or smaller. This swing range is represented by the difference between the steering angle found when the bar handle is operated to the leftmost and the steering angle found when the bar handle is operated to the rightmost (i.e. lock-to-lock).

The front-wheel and rear-wheel braking operation elements may be supported on the bar handle. In such implementations, for example, each of the front-wheel and rear-wheel braking operation elements may be a lever extending along the left or right grip of the bar handle. The rider may operate the front-wheel and rear-wheel braking operation elements with his hand. Alternatively, one of the front-wheel and rear-wheel braking operation elements may be a brake lever supported on the bar handle and the other may be a brake pedal positioned to be operable by the rider with his foot.

### EXPLANATION OF CHARACTERS

- 1: motorcycle
- 2: vehicle-body frame
- 3: front wheel
- 4: rear wheel
- 5: interlock braking apparatus
- 30: front-wheel brake
- 40: rear-wheel brake
- 51: interlock braking force generation unit
- 56: front-wheel interlock braking force generation unit
- 57: rear-wheel interlock braking force generation unit
- 61: road-surface inclination detection unit
- 62: brake operation amount detection unit
- 63: front-wheel brake operation amount detection unit
- 64: rear-wheel brake operation amount detection unit
- BL: brake lever
- BP: brake pedal

## Claims

1. A leaning vehicle (1) comprising:
a vehicle-body frame (2) capable of inclining to the left of the vehicle (1) while the vehicle (1) is turning to the left, and inclining to the right of the vehicle (1) while the vehicle (1) is turning to the right;
a front wheel (3) and a rear wheel (4) supported on the vehicle-body frame (2);
a front-wheel brake (30) provided on the front wheel (3) for applying braking force to the front wheel (3);
a rear-wheel brake (40) provided on the rear wheel (4) for applying braking force to the rear wheel (4);
a front-wheel braking operation element (BL) operable by a rider for generating braking force for the front-wheel brake (30) in response to an operation;
a rear-wheel braking operation element (BP) operable by the rider for generating braking force for the rear-wheel brake (40) in response to an operation; and
an interlock braking apparatus (5) configured to perform at least one of an operation in which braking force is applied not only to the front wheel (3) but also to the rear wheel (4) when the rider has operated the front-wheel braking operation element (BL) and an operation in which braking force is applied not only to the rear wheel (4) but also to the front wheel (3) when the rider has operated the rear-wheel braking operation element (BP), **characterized in that** the interlock braking apparatus (5) is configured to control the braking force being applied to the front wheel (3) and the braking force being applied to the rear wheel (4) in such a manner that a ratio of the braking force being applied to the rear wheel (4) to the braking force being applied to the front wheel (3) when the front-wheel braking operation element (BL) is being operated and the rear-wheel braking operation element (BP) is not being operated while the vehicle (1) is travelling on a downhill slope or uphill slope is different from a ratio of the braking force being applied to the rear wheel (4) to the braking force being applied to the front wheel (3) when the front-wheel braking operation element (BL) is being operated and the rear-wheel braking operation element (BP) is not being operated while the vehicle (1) is travelling on a horizontal road surface, or
the interlock braking apparatus (5) is configured to control the braking force being applied to the front wheel (3) and the braking force being applied to the rear wheel (4) in such a manner that a ratio of the braking force being applied to the front wheel (3) to the braking force being applied to the rear wheel (4) when the rear-wheel braking operation element (BP) is being operated and the front-wheel braking operation element (BL) is not being operated while the vehicle (1) is travelling on a downhill slope or uphill slope is different from a ratio of the braking force being applied to the front wheel (3) to the braking force being applied to the rear wheel (4) when the rear-wheel braking operation element (BP) is being operated and the front-wheel braking operation element (BL) is not being operated while the vehicle (1) is travelling on a horizontal road surface.

2. The leaning vehicle (1) according to claim 1, further comprising: a road-surface inclination detection unit (61) configured to detect an inclination status of a road surface on which the vehicle (1) is travelling with respect to a front-rear direction of the vehicle (1),
wherein the interlock braking apparatus (5) includes:
a front-wheel brake operation amount detection unit (63) configured to detect an operation amount of the front-wheel braking operation element (BL); and
a rear-wheel interlock braking force generation unit (57) configured to generate the braking force to be applied to the rear wheel (4) based on the inclination status of the road surface with respect to the front-rear direction of the vehicle (1) obtained by the road-surface inclination detection unit (61) and the operation amount of the front-wheel braking operation element (BL) obtained by the front-wheel brake operation amount detection unit (63), or
the interlock braking apparatus (5) includes:
a rear-wheel brake operation amount detection unit (64) configured to detect an operation amount of the rear-wheel braking operation element (BP); and
a front-wheel interlock braking force generation unit (56) configured to generate the braking force to be applied to the front wheel (3) based on the inclination status of the road surface with respect to the front-rear direction of the vehicle (1) obtained by the road-surface inclination detection unit (61) and the operation amount of the rear-wheel braking operation element (BP) obtained by the rear-wheel brake operation amount detection unit (64),
wherein the rear-wheel interlock braking force generation unit (57) is configured to control the braking force being applied to the rear wheel (4) in such a manner that a ratio of the braking force being applied to the rear wheel (4) to the braking force being applied to the front wheel (3) when the front-wheel braking operation element (BL) is being operated and the rear-wheel braking operation element (BP) is not being operated if the road-surface inclination detection unit (61) has detected that the road surface is a downhill slope or an uphill slope is different from a ratio of the braking force being applied to the rear wheel (4) to the braking force being applied to the front wheel (3) when the front-wheel braking operation element (BL) is being operated and the rear-wheel braking operation element (BP) is not being operated if the road-surface inclination detection unit (61) has detected that the road surface is horizontal; or
wherein the front-wheel interlock braking force generation unit (56) is configured to control the braking force being applied to the front wheel (3) in such a manner that a ratio of the braking force being applied to the front wheel (3) to the braking force being applied to the rear wheel (4) when the rear-wheel braking operation element (BP) is being operated and the front-wheel braking operation element (BL) is not being operated if the road-surface inclination detection unit (61) has detected that the road surface is a downhill slope or an uphill slope is different from a ratio of the braking force being applied to the front wheel (3) to the braking force being applied to the rear wheel (4) when the rear-wheel braking operation element (BP) is being operated and the front-wheel braking operation element (BL) is not being operated if the road-surface inclination detection unit (61) has detected that the road surface is horizontal.

3. The leaning vehicle (1) according to claim 2, wherein the interlock braking apparatus (5) includes: the front-wheel brake operation amount detection unit (63); the rear-wheel interlock braking force generation unit (57); and a front-wheel braking force generation unit (54) configured to generate the braking force to be applied to the front wheel (3) based on the operation amount of the front-wheel braking operation element (BL) obtained by the front-wheel brake operation amount detection unit (63), or
the interlock braking apparatus (5) includes: the rear-wheel brake operation amount detection unit (64); the front-wheel interlock braking force generation unit (56); and a rear-wheel braking force generation unit (55) configured to generate the braking force to be applied to the rear wheel (4) based on the operation amount of the rear-wheel braking operation element (BP) obtained by the rear-wheel brake operation amount detection unit (64).

4. The leaning vehicle (1) according to claim 3, wherein the front-wheel braking force generation unit (54) is configured to generate the braking force to be applied to the front wheel (3) depending on the inclination status of the road surface with respect to the front-rear direction of the vehicle (1) obtained by the road-surface inclination detection unit (61), or
the rear-wheel braking force generation unit (55) is configured to generate the braking force to be applied to the rear wheel (4) depending on the inclination status of the road surface with respect to the front-rear direction of the vehicle (1) obtained by the road-surface inclination detection unit (61).

5. The leaning vehicle (1) according to claim 1, wherein the interlock braking apparatus (5) is configured to control the braking force being applied to the front wheel (3) and the braking force being applied to the rear wheel (4) in such a manner that the ratio of the braking force being applied to the rear wheel (4) to the braking force being applied to the front wheel (3) when the front-wheel braking operation element (BL) is being operated and the rear-wheel braking operation element (BP) is not being operated while the vehicle (1) is travelling on a downhill slope or an uphill slope is different from the ratio of the braking force being applied to the rear wheel (4) to the braking force being applied to the front wheel (3) when the front-wheel braking operation element (BL) is being operated and the rear-wheel braking operation element (BP) is not being operated while the vehicle (1) is travelling on a horizontal road surface, and
to control the braking force being applied to the front wheel (3) and the braking force being applied to the rear wheel (4) in such a manner that the ratio of the braking force being applied to the front wheel (3) to the braking force being applied to the rear wheel (4) when the rear-wheel braking operation element (BP) is being operated and the front-wheel braking operation element (BL) is not being operated while the vehicle (1) is travelling on a downhill slope or an uphill slope is different from the ratio of the braking force being applied to the front wheel (3) to the braking force being applied to the rear wheel (4) when the rear-wheel braking operation element (BP) is being operated and the front-wheel braking operation element (BL) is not being operated while the vehicle (1) is travelling on a horizontal road surface.

6. The leaning vehicle (1) according to claim 5, further comprising:
a road-surface inclination detection unit (61) configured to detect an inclination status of a road surface on which the vehicle (1) is travelling with respect to a front-rear direction of the vehicle (1),
wherein the interlock braking apparatus (5) further includes:
a front-wheel brake operation amount detection unit (63) configured to detect an operation amount of the front-wheel braking operation element (BL); and
a rear-wheel interlock braking force generation unit (57) configured to generate the braking force to be applied to the rear wheel (4) based on the inclination status of the road surface with respect to the front-rear direction of the vehicle (1) obtained by the road-surface inclination detection unit (61) and the operation amount of the front-wheel braking operation element (BL) obtained by the front-wheel brake operation amount detection unit (63), and
the interlock braking apparatus (5) further includes:
a rear-wheel brake operation amount detection unit (64) configured to detect an operation amount of the rear-wheel braking operation element (BP); and
a front-wheel interlock braking force generation unit (56) configured to generate the braking force to be applied to the front wheel (3) based on the inclination status of the road surface with respect to the front-rear direction of the vehicle (1) obtained by the road-surface inclination detection unit (61) and the operation amount of the rear-wheel braking operation element (BP) obtained by the rear-wheel brake operation amount detection unit (64),
wherein the rear-wheel interlock braking force generation unit (57) is configured to control the braking force being applied to the rear wheel (4) in such a manner that a ratio of the braking force being applied to the rear wheel (4) to the braking force being applied to the front wheel (3) when the front-wheel braking operation element (BL) is being operated and the rear-wheel braking operation element (BP) is not being operated if the road-surface inclination detection unit (61) has detected that the road surface is a downhill slope or an uphill slope is different from a ratio of the braking force being applied to the rear wheel (4) to the braking force being applied to the front wheel (3) when the front-wheel braking operation element (BL) is being operated and the rear-wheel braking operation element (BP) is not being operated if the road-surface inclination detection unit (61) has detected that the road surface is horizontal, and
the front-wheel interlock braking force generation unit (56) is configured to control the braking force being applied to the front wheel (3) in such a manner that a ratio of the braking force being applied to the front wheel (3) to the braking force being applied to the rear wheel (4) when the rear-wheel braking operation element (BP) is being operated and the front-wheel braking operation element (BL) is not being operated if the road-surface inclination detection unit (61) has detected that the road surface is a downhill slope or an uphill slope is different from a ratio of the braking force being applied to the front wheel (3) to the braking force being applied to the rear wheel (4) when the rear-wheel braking operation element (BP) is being operated and the front-wheel braking operation element (BL) is not being operated if the road-surface inclination detection unit (61) has detected that the road surface is horizontal.

7. The leaning vehicle (1) according to claim 6, wherein the interlock braking apparatus (5) includes: the front-wheel brake operation amount detection unit (63); the rear-wheel interlock braking force generation unit (57); and a front-wheel braking force generation unit (54) configured to generate the braking force to be applied to the front wheel (3) based on the operation amount of the front-wheel braking operation element (BL) obtained by the front-wheel brake operation amount detection unit (63); and
the rear-wheel brake operation amount detection unit (64); the front-wheel interlock braking force generation unit (56); and a rear-wheel braking force generation unit (55) configured to generate the braking force to be applied to the rear wheel (4) based on the operation amount of the rear-wheel braking operation element (BP) obtained by the rear-wheel brake operation amount detection unit (64).

8. The leaning vehicle (1) according to claim 7, wherein the front-wheel braking force generation unit (54) is configured to generate the braking force to be applied to the front wheel (3) depending on the inclination status of the road surface with respect to the front-rear direction of the vehicle (1) obtained by the road-surface inclination detection unit (61), and
the rear-wheel braking force generation unit (55) is configured to generate the braking force to be applied to the rear wheel (4) depending on the inclination status of the road surface with respect to the front-rear direction of the vehicle (1) obtained by the road-surface inclination detection unit (61).

9. The leaning vehicle (1) according to any one of claims 1 to 8, wherein the interlock braking apparatus (5) is configured to control the braking force being applied to the front wheel (3) and the braking force being applied to the rear wheel (4) in such a manner that a ratio of the braking force being applied to the rear wheel (4) to the braking force being applied to the front wheel (3) when the front-wheel braking operation element (BL) is being operated and the rear-wheel braking operation element (BP) is not being operated while the vehicle (1) is travelling on a downhill slope is smaller than the ratio of the braking force being applied to the rear wheel (4) to the braking force being applied to the front wheel (3) when the front-wheel braking operation element (BL) is being operated and the rear-wheel braking operation element (BP) is not being operated while the vehicle (1) is travelling on a horizontal road surface, and that a ratio of the braking force being applied to the rear wheel (4) to the braking force being applied to the front wheel (3) when the front-wheel braking operation element (BL) is being operated and the rear-wheel braking operation element (BP) is not being operated while the vehicle (1) is travelling on an uphill slope is larger than the ratio of the braking force being applied to the rear wheel to the braking force being applied to the front wheel (3) when the front-wheel braking operation element (BL) is being operated and the rear-wheel braking operation element (BP) is not being operated while the vehicle (1) is travelling on a horizontal road surface, or
the interlock braking apparatus (5) is configured to control the braking force being applied to the front wheel (3) and the braking force being applied to the rear wheel (4) in such a manner that a ratio of the braking force being applied to the front wheel (3) to the braking force being applied to the rear wheel (4) when the rear-wheel braking operation element (BP) is being operated and the front-wheel braking operation element (BL) is not being operated while the vehicle (1) is travelling on a downhill slope is larger than the ratio of the braking force being applied to the front wheel (3) to the braking force being applied to the rear wheel (4) when the rear-wheel braking operation element (BP) is being operated and the front-wheel braking operation element (BL) is not being operated while the vehicle (1) is travelling on a horizontal road surface, and that a ratio of the braking force being applied to the front wheel (3) to the braking force being applied to the rear wheel (4) when the rear-wheel braking operation element (BP) is being operated and the front-wheel braking operation element (BL) is not being operated while the vehicle (1) is travelling on an uphill slope is smaller than the ratio of the braking force being applied to the front wheel (3) to the braking force being applied to the rear wheel (4) when the rear-wheel braking operation element (BP) is being operated and the front-wheel braking operation element (BL) is not being operated while the vehicle (1) is travelling on a horizontal road surface.

10. The leaning vehicle (1) according to any one of claims 1 to 8, wherein the interlock braking apparatus (5) is configured to control the braking force being applied to the front wheel (3) and the braking force being applied to the rear wheel (4) in such a manner that a ratio of the braking force being applied to the rear wheel (4) to the braking force being applied to the front wheel (3) when the front-wheel braking operation element (BL) is being operated and the rear-wheel braking operation element (BP) is not being operated while the vehicle (1) is travelling on a downhill slope is larger than the ratio of the braking force being applied to the rear wheel (4) to the braking force being applied to the front wheel (3) when the front-wheel braking operation element (BL) is being operated and the rear-wheel braking operation element (BP) is not being operated while the vehicle (1) is travelling on a horizontal road surface, and that a ratio of the braking force being applied to the rear wheel (4) to the braking force being applied to the front wheel (3) when the front-wheel braking operation element (BL) is being operated and the rear-wheel braking operation element (BP) is not being operated while the vehicle (1) is travelling on an uphill slope is smaller than the ratio of the braking force being applied to the rear wheel (4) to the braking force being applied to the front wheel (3) when the front-wheel braking operation element (BL) is being operated and the rear-wheel braking operation element (BP) is not being operated while the vehicle (1) is travelling on a horizontal road surface, or
the interlock braking apparatus (5) is configured to control the braking force being applied to the front wheel (3) and the braking force being applied to the rear wheel (4) in such a manner that a ratio of the braking force being applied to the front wheel (3) to the braking force being applied to the rear wheel (4) when the rear-wheel braking operation element (BP) is being operated and the front-wheel braking operation element (BL) is not being operated while the vehicle (1) is travelling on a downhill slope is smaller than the ratio of the braking force being applied to the front wheel (3) to the braking force being applied to the rear wheel (4) when the rear-wheel braking operation element (BP) is being operated and the front-wheel braking operation element (BL) is not being operated while the vehicle (1) is travelling on a horizontal road surface, and that a ratio of the braking force being applied to the front wheel (3) to the braking force being applied to the rear wheel (4) when the rear-wheel braking operation element (BP) is being operated and the front-wheel braking operation element (BL) is not being operated while the vehicle (1) is travelling on an uphill slope is larger than the ratio of the braking force being applied to the front wheel (3) to the braking force being applied to the rear wheel (4) when the rear-wheel braking operation element (BP) is being operated and the front-wheel braking operation element (BL) is not being operated while the vehicle (1) is travelling on a horizontal road surface.

## Patentansprüche

1. Ein Neigungsfahrzeug (1), das folgende Merkmale aufweist:
einen Fahrzeugkarosserierahmen (2), der in der Lage ist, sich zur linken Seite des Fahrzeugs (1) zu neigen, während sich das Fahrzeug (1) nach links wendet, und sich zur rechten Seite des Fahrzeugs (1) zu neigen, während sich das Fahrzeug nach rechts wendet;
ein Vorderrad (3) und ein Hinterrad (4), die an dem Fahrzeugkarosserierahmen (2) getragen sind;
eine Vorderradbremse (30), die an dem Vorderrad (3) vorgesehen ist, um eine Bremskraft auf das Vorderrad (3) auszuüben;
eine Hinterradbremse (40), die an dem Hinterrad (4) vorgesehen ist, um eine Bremskraft auf das Hinterrad (4) auszuüben;
ein Vorderradbremsbetätigungselement (BL), das seitens eines Fahrers betätigbar ist, um ansprechend auf eine Betätigung eine Bremskraft für die Vorderradbremse (30) erzeugen;
ein Hinterradbremsbetätigungselement (BP), das seitens eines Fahrers betätigbar ist, um ansprechend auf eine Betätigung eine Bremskraft für die Hinterradbremse (40) erzeugen; und
eine Verriegelungsbremsvorrichtung (5), die dazu konfiguriert ist, zumindest entweder eine Betätigung, bei der eine Bremskraft nicht nur auf das Vorderrad (3), sondern auch auf das Hinterrad (4) ausgeübt wird, wenn der Fahrer das Vorderradbremsbetätigungselement (BL) betätigt hat, und/oder eine Betätigung, bei der eine Bremskraft nicht nur auf das Hinterrad (4), sondern auch auf das Vorderrad (3) ausgeübt wird, wenn der Fahrer das Hinterradbremsbetätigungselement (BP) betätigt hat, auszuführen,
**dadurch gekennzeichnet,**
**dass** die Verriegelungsbremsvorrichtung (5) dazu konfiguriert ist, die auf das Vorderrad (3) ausgeübte Bremskraft und die auf das Hinterrad (4) ausgeübte Bremskraft derart zu steuern, dass sich ein Verhältnis der auf das Hinterrad (4) ausgeübten Bremskraft zu der auf das Vorderrad (3) ausgeübten Bremskraft, wenn das Vorderradbremsbetätigungselement (BL) betätigt wird und das Hinterradbremsbetätigungselement (BP) nicht betätigt wird, während das Fahrzeug (1) auf einer nach unten abfallenden Neigung oder auf einer nach oben ansteigenden Neigung fährt, von einem Verhältnis der auf das Hinterrad (4) ausgeübten Bremskraft zu der auf das Vorderrad (3) ausgeübten Bremskraft, wenn das Vorderradbremsbetätigungselement (BL) betätigt wird und das Hinterradbremsbetätigungselement (BP) nicht betätigt wird, während das Fahrzeug (1) auf einer horizontalen Straßenoberfläche fährt, unterscheidet, oder
**dass** die Verriegelungsbremsvorrichtung (5) dazu konfiguriert ist, die auf das Vorderrad (3) ausgeübte Bremskraft und die auf das Hinterrad (4) ausgeübte Bremskraft derart zu steuern, dass sich ein Verhältnis der auf das Vorderrad (3) ausgeübten Bremskraft zu der auf das Hinterrad (4) ausgeübten Bremskraft, wenn das Hinterradbremsbetätigungselement (BP) betätigt wird und das Vorderradbremsbetätigungselement (BL) nicht betätigt wird, während das Fahrzeug (1) auf einer nach unten abfallenden Neigung oder auf einer nach oben ansteigenden Neigung fährt, von einem Verhältnis der auf das Vorderrad (3) ausgeübten Bremskraft zu der auf das Hinterrad (4) ausgeübten Bremskraft, wenn das Hinterradbremsbetätigungselement (BP) betätigt wird und das Vorderradbremsbetätigungselement (BL) nicht betätigt wird, während das Fahrzeug (1) auf einer horizontalen Straßenoberfläche fährt, unterscheidet.

2. Das Neigungsfahrzeug (1) gemäß Anspruch 1, das ferner folgende Merkmale aufweist: eine Straßenoberflächenneigungsdetektionseinheit (61), die dazu konfiguriert ist, einen Neigungsstatus einer Straßenoberfläche, auf der das Fahrzeug (1) fährt, bezüglich einer Vorne-Hinten-Richtung des Fahrzeugs (1) zu detektieren,
wobei die Verriegelungsbremsvorrichtung (5) folgende Merkmale umfasst:
eine Vorderradbremsbetätigungsumfangsdetektionseinheit (63), die dazu konfiguriert ist, einen Betätigungsumfang des Vorderradbremsbetätigungselements (BL) zu detektieren; und
eine Hinterradverriegelungsbremskrafterzeugungseinheit (57), die dazu konfiguriert ist, die auf das Hinterrad (4) auszuübende Bremskraft auf der Basis des Neigungsstatus der Straßenoberfläche bezüglich der Vorne-Hinten-Richtung des Fahrzeugs (1), der durch die Straßenoberflächenneigungsdetektionseinheit (61) erhalten wird, und des Betätigungsumfangs des Vorderradbremsbetätigungselements (BL), der durch die Vorderradbremsbetätigungsumfangsdetektionseinheit (63) erhalten wird, zu erzeugen, oder
die Verriegelungsbremsvorrichtung (5) folgende Merkmale umfasst:
eine Hinterradbremsbetätigungsumfangsdetektionseinheit (64), die dazu konfiguriert ist, einen Betätigungsumfang des Hinterradbremsbetätigungselement (BP) zu detektieren; und
eine Vorderradverriegelungsbremskrafterzeugungseinheit (56), die dazu konfiguriert ist, die auf das Vorderrad (3) auszuübende Bremskraft auf der Basis des Neigungsstatus der Straßenoberfläche bezüglich der Vorne-Hinten-Richtung des Fahrzeugs (1), der durch die Straßenoberflächenneigungsdetektionseinheit (61) erhalten wird, und des Betätigungsumfangs des Hinterradbremsbetätigungselements (BP), der durch die Hinterradbremsbetätigungsumfangsdetektionseinheit (64) erhalten wird, zu erzeugen,
wobei die Hinterradverriegelungsbremskrafterzeugungseinheit (57) dazu konfiguriert ist, die auf das Hinterrad (4) ausgeübte Bremskraft derart zu steuern, dass sich ein Verhältnis der auf das Hinterrad (4) ausgeübten Bremskraft zu der auf das Vorderrad (3) ausgeübten Bremskraft, wenn das Vorderradbremsbetätigungselement (BL) betätigt wird und das Hinterradbremsbetätigungselement (BP) nicht betätigt wird, falls die Straßenoberflächenneigungsdetektionseinheit (61) detektiert hat, dass die Straßenoberfläche eine nach unten abfallende Neigung oder eine nach oben ansteigende Neigung ist, von einem Verhältnis der auf das Hinterrad (4) ausgeübten Bremskraft zu der auf das Vorderrad (3) ausgeübten Bremskraft, wenn das Vorderradbremsbetätigungselement (BL) betätigt wird und das Hinterradbremsbetätigungselement (BP) nicht betätigt wird, falls die Straßenoberflächenneigungsdetektionseinheit (61) detektiert hat, dass die Straßenoberfläche eine horizontal ist, unterscheidet; oder
wobei die Vorderradverriegelungsbremskrafterzeugungseinheit (56) dazu konfiguriert ist, die auf das Vorderrad (3) ausgeübte Bremskraft derart zu steuern, dass sich ein Verhältnis der auf das Vorderrad (3) ausgeübten Bremskraft zu der auf das Hinterrad (4) ausgeübten Bremskraft, wenn das Hinterradbremsbetätigungselement (BP) betätigt wird und das Vorderradbremsbetätigungselement (BL) nicht betätigt wird, falls die Straßenoberflächenneigungsdetektionseinheit (61) detektiert hat, dass die Straßenoberfläche eine nach unten abfallende Neigung oder eine nach oben ansteigende Neigung ist, von einem Verhältnis der auf das Vorderrad (3) ausgeübten Bremskraft zu der auf das Hinterrad (4) ausgeübten Bremskraft, wenn das Hinterradbremsbetätigungselement (BP) betätigt wird und das Vorderradbremsbetätigungselement (BL) nicht betätigt wird, falls die Straßenoberflächenneigungsdetektionseinheit (61) detektiert hat, dass die Straßenoberfläche eine horizontal ist, unterscheidet.

3. Das Neigungsfahrzeug (1) gemäß Anspruch 2, bei dem die Verriegelungsbremsvorrichtung (5) folgende Merkmale umfasst: die Vorderradbremsbetätigungsumfangsdetektionseinheit (63); die Hinterradverriegelungsbremskrafterzeugungseinheit (57); und eine Vorderradbremskrafterzeugungseinheit (54), die dazu konfiguriert ist, die auf das Vorderrad (3) auszuübende Bremskraft auf der Basis des Betätigungsumfangs des Vorderradbremsbetätigungselements (BL), der durch die Vorderradbremsbetätigungsumfangsdetektionseinheit (63) erhalten wird, zu erzeugen, oder
die Verriegelungsbremsvorrichtung (5) folgende Merkmale umfasst: die Hinterradbremsbetätigungsumfangsdetektionseinheit (64); die Vorderradverriegelungsbremskrafterzeugungseinheit (56); und eine Hinterradbremskrafterzeugungseinheit (55), die dazu konfiguriert ist, die auf das Hinterrad (4) auszuübende Bremskraft auf der Basis des Betätigungsumfangs des Hinterradbremsbetätigungselements (BP), der durch die Hinterradbremsbetätigungsumfangsdetektionseinheit (64) erhalten wird, zu erzeugen.

4. Das Neigungsfahrzeug (1) gemäß Anspruch 3, bei dem die Vorderradbremskrafterzeugungseinheit (54) dazu konfiguriert ist, die auf das Vorderrad (3) auszuübende Bremskraft in Abhängigkeit von dem Neigungsstatus der Straßenoberfläche bezüglich der Vorne-Hinten-Richtung des Fahrzeugs (1), der durch die Straßenoberflächenneigungsdetektionseinheit (1) erhalten wird, zu erzeugen, oder
die Hinterradbremskrafterzeugungseinheit (55) dazu konfiguriert ist, die auf das Hinterrad (4) auszuübende Bremskraft in Abhängigkeit von dem Neigungsstatus der Straßenoberfläche bezüglich der Vorne-Hinten-Richtung des Fahrzeugs (1), der durch die Straßenoberflächenneigungsdetektionseinheit (1) erhalten wird, zu erzeugen.

5. Das Neigungsfahrzeug (1) gemäß Anspruch 1, bei dem die Verriegelungsbremsvorrichtung (5) dazu konfiguriert ist, die auf das Vorderrad (3) ausgeübte Bremskraft und die auf das Hinterrad (4) ausgeübte Bremskraft derart zu steuern, dass sich das Verhältnis der auf das Hinterrad (4) ausgeübten Bremskraft zu der auf das Vorderrad (3) ausgeübten Bremskraft, wenn das Vorderradbremsbetätigungselement (BL) betätigt wird und das Hinterradbremsbetätigungselement (BP) nicht betätigt wird, während das Fahrzeug (1) auf einer nach unten abfallenden Neigung oder auf einer nach oben ansteigenden Neigung fährt, von dem Verhältnis der auf das Hinterrad (4) ausgeübten Bremskraft zu der auf das Vorderrad (3) ausgeübten Bremskraft, wenn das Vorderradbremsbetätigungselement (BL) betätigt wird und das Hinterradbremsbetätigungselement (BP) nicht betätigt wird, während das Fahrzeug (1) auf einer horizontalen Straßenoberfläche fährt, unterscheidet, und
die auf das Vorderrad (3) ausgeübte Bremskraft und die auf das Hinterrad (4) ausgeübte Bremskraft derart zu steuern, dass sich das Verhältnis der auf das Vorderrad (3) ausgeübten Bremskraft zu der auf das Hinterrad (4) ausgeübten Bremskraft, wenn das Hinterradbremsbetätigungselement (BP) betätigt wird und das Vorderradbremsbetätigungselement (BL) nicht betätigt wird, während das Fahrzeug (1) auf einer nach unten abfallenden Neigung oder auf einer nach oben ansteigenden Neigung fährt, von dem Verhältnis der auf das Vorderrad (3) ausgeübten Bremskraft zu der auf das Hinterrad (4) ausgeübten Bremskraft, wenn das Hinterradbremsbetätigungselement (BP) betätigt wird und das Vorderradbremsbetätigungselement (BL) nicht betätigt wird, während das Fahrzeug (1) auf einer horizontalen Straßenoberfläche fährt, unterscheidet.

6. Das Neigungsfahrzeug (1) gemäß Anspruch 5, das ferner folgende Merkmale aufweist: eine Straßenoberflächenneigungsdetektionseinheit (61), die dazu konfiguriert ist, einen Neigungsstatus einer Straßenoberfläche, auf der das Fahrzeug (1) fährt, bezüglich einer Vorne-Hinten-Richtung des Fahrzeugs (1) zu detektieren,
wobei die Verriegelungsbremsvorrichtung (5) ferner folgende Merkmale umfasst:
eine Vorderradbremsbetätigungsumfangsdetektionseinheit (63), die dazu konfiguriert ist, einen Betätigungsumfang des Vorderradbremsbetätigungselements (BL) zu detektieren; und
eine Hinterradverriegelungsbremskrafterzeugungseinheit (57), die dazu konfiguriert ist, die auf das Hinterrad (4) auszuübende Bremskraft auf der Basis des Neigungsstatus der Straßenoberfläche bezüglich der Vorne-Hinten-Richtung des Fahrzeugs (1), der durch die Straßenoberflächenneigungsdetektionseinheit (61) erhalten wird, und des Betätigungsumfangs des Vorderradbremsbetätigungselements (BL), der durch die Vorderradbremsbetätigungsumfangsdetektionseinheit (63) erhalten wird, zu erzeugen, und
die Verriegelungsbremsvorrichtung (5) ferner folgende Merkmale umfasst:
eine Hinterradbremsbetätigungsumfangsdetektionseinheit (64), die dazu konfiguriert ist, einen Betätigungsumfang des Hinterradbremsbetätigungselement (BP) zu detektieren; und
eine Vorderradverriegelungsbremskrafterzeugungseinheit (56), die dazu konfiguriert ist, die auf das Vorderrad (3) auszuübende Bremskraft auf der Basis des Neigungsstatus der Straßenoberfläche bezüglich der Vorne-Hinten-Richtung des Fahrzeugs (1), der durch die Straßenoberflächenneigungsdetektionseinheit (61) erhalten wird, und des Betätigungsumfangs des Hinterradbremsbetätigungselements (BP), der durch die Hinterradbremsbetätigungsumfangsdetektionseinheit (64) erhalten wird, zu erzeugen,
wobei die Hinterradverriegelungsbremskrafterzeugungseinheit (57) dazu konfiguriert ist, die auf das Hinterrad (4) ausgeübte Bremskraft derart zu steuern, dass sich ein Verhältnis der auf das Hinterrad (4) ausgeübten Bremskraft zu der auf das Vorderrad (3) ausgeübten Bremskraft, wenn das Vorderradbremsbetätigungselement (BL) betätigt wird und das Hinterradbremsbetätigungselement (BP) nicht betätigt wird, falls die Straßenoberflächenneigungsdetektionseinheit (61) detektiert hat, dass die Straßenoberfläche eine nach unten abfallende Neigung oder eine nach oben ansteigende Neigung ist, von einem Verhältnis der auf das Hinterrad (4) ausgeübten Bremskraft zu der auf das Vorderrad (3) ausgeübten Bremskraft, wenn das Vorderradbremsbetätigungselement (BL) betätigt wird und das Hinterradbremsbetätigungselement (BP) nicht betätigt wird, falls die Straßenoberflächenneigungsdetektionseinheit (61) detektiert hat, dass die Straßenoberfläche eine horizontal ist, unterscheidet, und
die Vorderradverriegelungsbremskrafterzeugungseinheit (56) dazu konfiguriert ist, die auf das Vorderrad (3) ausgeübte Bremskraft derart zu steuern, dass sich ein Verhältnis der auf das Vorderrad (3) ausgeübten Bremskraft zu der auf das Hinterrad (4) ausgeübten Bremskraft, wenn das Hinterradbremsbetätigungselement (BP) betätigt wird und das Vorderradbremsbetätigungselement (BL) nicht betätigt wird, falls die Straßenoberflächenneigungsdetektionseinheit (61) detektiert hat, dass die Straßenoberfläche eine nach unten abfallende Neigung oder eine nach oben ansteigende Neigung ist, von einem Verhältnis der auf das Vorderrad (3) ausgeübten Bremskraft zu der auf das Hinterrad (4) ausgeübten Bremskraft, wenn das Hinterradbremsbetätigungselement (BP) betätigt wird und das Vorderradbremsbetätigungselement (BL) nicht betätigt wird, falls die Straßenoberflächenneigungsdetektionseinheit (61) detektiert hat, dass die Straßenoberfläche eine horizontal ist, unterscheidet.

7. Das Neigungsfahrzeug (1) gemäß Anspruch 6, bei dem die Verriegelungsbremsvorrichtung (5) folgende Merkmale umfasst: die Vorderradbremsbetätigungsumfangsdetektionseinheit (63); die Hinterradverriegelungsbremskrafterzeugungseinheit (57); und eine Vorderradbremskrafterzeugungseinheit (54), die dazu konfiguriert ist, die auf das Vorderrad (3) auszuübende Bremskraft auf der Basis des Betätigungsumfangs des Vorderradbremsbetätigungselements (BL), der durch die Vorderradbremsbetätigungsumfangsdetektionseinheit (63) erhalten wird, zu erzeugen; und
die Hinterradbremsbetätigungsumfangsdetektionseinheit (64); die Vorderradverriegelungsbremskrafterzeugungseinheit (56); und eine Hinterradbremskrafterzeugungseinheit (55), die dazu konfiguriert ist, die auf das Hinterrad (4) auszuübende Bremskraft auf der Basis des Betätigungsumfangs des Hinterradbremsbetätigungselements (BP), der durch die Hinterradbremsbetätigungsumfangsdetektionseinheit (64) erhalten wird, zu erzeugen.

8. Das Neigungsfahrzeug (1) gemäß Anspruch 7, bei dem die Vorderradbremskrafterzeugungseinheit (54) dazu konfiguriert ist, die auf das Vorderrad (3) auszuübende Bremskraft in Abhängigkeit von dem Neigungsstatus der Straßenoberfläche bezüglich der Vorne-Hinten-Richtung des Fahrzeugs (1), der durch die Straßenoberflächenneigungsdetektionseinheit (1) erhalten wird, zu erzeugen, und
die Hinterradbremskrafterzeugungseinheit (55) dazu konfiguriert ist, die auf das Hinterrad (4) auszuübende Bremskraft in Abhängigkeit von dem Neigungsstatus der Straßenoberfläche bezüglich der Vorne-Hinten-Richtung des Fahrzeugs (1), der durch die Straßenoberflächenneigungsdetektionseinheit (1) erhalten wird, zu erzeugen.

9. Das Neigungsfahrzeug (1) gemäß einem der Ansprüche 1 bis 8, bei dem die Verriegelungsbremsvorrichtung (5) dazu konfiguriert ist, die auf das Vorderrad (3) ausgeübte Bremskraft und die auf das Hinterrad (4) ausgeübte Bremskraft derart zu steuern, dass ein Verhältnis der auf das Hinterrad (4) ausgeübten Bremskraft zu der auf das Vorderrad (3) ausgeübten Bremskraft, wenn das Vorderradbremsbetätigungselement (BL) betätigt wird und das Hinterradbremsbetätigungselement (BP) nicht betätigt wird, während das Fahrzeug (1) auf einer nach unten abfallenden Neigung fährt, kleiner ist als das Verhältnis der auf das Hinterrad (4) ausgeübten Bremskraft zu der auf das Vorderrad (3) ausgeübten Bremskraft, wenn das Vorderradbremsbetätigungselement (BL) betätigt wird und das Hinterradbremsbetätigungselement (BP) nicht betätigt wird, während das Fahrzeug (1) auf einer horizontalen Straßenoberfläche fährt, und dass ein Verhältnis der auf das Hinterrad (4) ausgeübten Bremskraft zu der auf das Vorderrad (3) ausgeübten Bremskraft, wenn das Vorderradbremsbetätigungselement (BL) betätigt wird und das Hinterradbremsbetätigungselement (BP) nicht betätigt wird, während das Fahrzeug (1) auf einer nach oben ansteigenden Neigung fährt, größer ist als das Verhältnis der auf das Hinterrad ausgeübten Bremskraft zu der auf das Vorderrad (3) ausgeübten Bremskraft, wenn das Vorderradbremsbetätigungselement (BL) betätigt wird und das Hinterradbremsbetätigungselement (BP) nicht betätigt wird, während das Fahrzeug (1) auf einer horizontalen Straßenoberfläche fährt, oder
die Verriegelungsbremsvorrichtung (5) dazu konfiguriert ist, die auf das Vorderrad (3) ausgeübte Bremskraft und die auf das Hinterrad (4) ausgeübte Bremskraft derart zu steuern, dass ein Verhältnis der auf das Vorderrad (3) ausgeübten Bremskraft zu der auf das Hinterrad (4) ausgeübten Bremskraft, wenn das Hinterradbremsbetätigungselement (BP) betätigt wird und das Vorderradbremsbetätigungselement (BL) nicht betätigt wird, während das Fahrzeug (1) auf einer nach unten abfallenden Neigung fährt, größer ist als das Verhältnis der auf das Vorderrad (3) ausgeübten Bremskraft zu der auf das Hinterrad (4) ausgeübten Bremskraft, wenn das Hinterradbremsbetätigungselement (BP) betätigt wird und das Vorderradbremsbetätigungselement (BL) nicht betätigt wird, während das Fahrzeug (1) auf einer horizontalen Straßenoberfläche fährt, und dass ein Verhältnis der auf das Vorderrad (3) ausgeübten Bremskraft zu der auf das Hinterrad (4) ausgeübten Bremskraft, wenn das Hinterradbremsbetätigungselement (BP) betätigt wird und das Vorderradbremsbetätigungselement (BL) nicht betätigt wird, während das Fahrzeug (1) auf einer nach oben ansteigenden Neigung fährt, kleiner ist als das Verhältnis der auf das Vorderrad (3) ausgeübten Bremskraft zu der auf das Hinterrad (4) ausgeübten Bremskraft, wenn das Hinterradbremsbetätigungselement (BP) betätigt wird und das Vorderradbremsbetätigungselement (BL) nicht betätigt wird, während das Fahrzeug (1) auf einer horizontalen Straßenoberfläche fährt.

10. Das Neigungsfahrzeug (1) gemäß einem der Ansprüche 1 bis 8, bei dem die Verriegelungsbremsvorrichtung (5) dazu konfiguriert ist, die auf das Vorderrad (3) ausgeübte Bremskraft und die auf das Hinterrad (4) ausgeübte Bremskraft derart zu steuern, dass ein Verhältnis der auf das Hinterrad (4) ausgeübten Bremskraft zu der auf das Vorderrad (3) ausgeübten Bremskraft, wenn das Vorderradbremsbetätigungselement (BL) betätigt wird und das Hinterradbremsbetätigungselement (BP) nicht betätigt wird, während das Fahrzeug (1) auf einer nach unten abfallenden Neigung fährt, größer ist als das Verhältnis der auf das Hinterrad (4) ausgeübten Bremskraft zu der auf das Vorderrad (3) ausgeübten Bremskraft, wenn das Vorderradbremsbetätigungselement (BL) betätigt wird und das Hinterradbremsbetätigungselement (BP) nicht betätigt wird, während das Fahrzeug (1) auf einer horizontalen Straßenoberfläche fährt, und dass ein Verhältnis der auf das Hinterrad (4) ausgeübten Bremskraft zu der auf das Vorderrad (3) ausgeübten Bremskraft, wenn das Vorderradbremsbetätigungselement (BL) betätigt wird und das Hinterradbremsbetätigungselement (BP) nicht betätigt wird, während das Fahrzeug (1) auf einer nach oben ansteigenden Neigung fährt, kleiner ist als das Verhältnis der auf das Hinterrad (4) ausgeübten Bremskraft zu der auf das Vorderrad (3) ausgeübten Bremskraft, wenn das Vorderradbremsbetätigungselement (BL) betätigt wird und das Hinterradbremsbetätigungselement (BP) nicht betätigt wird, während das Fahrzeug (1) auf einer horizontalen Straßenoberfläche fährt, oder
die Verriegelungsbremsvorrichtung (5) dazu konfiguriert ist, die auf das Vorderrad (3) ausgeübte Bremskraft und die auf das Hinterrad (4) ausgeübte Bremskraft derart zu steuern, dass ein Verhältnis der auf das Vorderrad (3) ausgeübten Bremskraft zu der auf das Hinterrad (4) ausgeübten Bremskraft, wenn das Hinterradbremsbetätigungselement (BP) betätigt wird und das Vorderradbremsbetätigungselement (BL) nicht betätigt wird, während das Fahrzeug (1) auf einer nach unten abfallenden Neigung fährt, kleiner ist als das Verhältnis der auf das Vorderrad (3) ausgeübten Bremskraft zu der auf das Hinterrad (4) ausgeübten Bremskraft, wenn das Hinterradbremsbetätigungselement (BP) betätigt wird und das Vorderradbremsbetätigungselement (BL) nicht betätigt wird, während das Fahrzeug (1) auf einer horizontalen Straßenoberfläche fährt, und dass ein Verhältnis der auf das Vorderrad (3) ausgeübten Bremskraft zu der auf das Hinterrad (4) ausgeübten Bremskraft, wenn das Hinterradbremsbetätigungselement (BP) betätigt wird und das Vorderradbremsbetätigungselement (BL) nicht betätigt wird, während das Fahrzeug (1) auf einer nach oben ansteigenden Neigung fährt, größer ist als das Verhältnis der auf das Vorderrad (3) ausgeübten Bremskraft zu der auf das Hinterrad (4) ausgeübten Bremskraft, wenn das Hinterradbremsbetätigungselement (BP) betätigt wird und das Vorderradbremsbetätigungselement (BL) nicht betätigt wird, während das Fahrzeug (1) auf einer horizontalen Straßenoberfläche fährt.

## Revendications

1. Véhicule à inclinaison (1), comprenant:
un châssis de carrosserie de véhicule (2) à même de s'incliner vers la gauche du véhicule (1) tandis que le véhicule (1) vire à gauche, et de s'incliner vers la droite du véhicule (1) tandis que le véhicule (1) vire à droite;
une roue avant (3) et une roue arrière (4) supportées sur le châssis de carrosserie de véhicule (2);
un frein de roue avant (30) prévu sur la roue avant (3) pour appliquer une force de freinage à la roue avant (3);
un frein de roue arrière (40) prévu sur la roue arrière (4) pour appliquer une force de freinage à la roue arrière (4);
un élément d'actionnement de frein de roue avant (BL) pouvant être actionné par un conducteur pour générer une force de freinage pour le frein de roue avant (30) en réponse à un actionnement;
un élément d'actionnement de frein de roue arrière (BP) pouvant être actionné par le conducteur pour générer une force de freinage pour le frein de roue arrière (40) en réponse à un actionnement; et
un appareil de freinage à verrouillage (5) configuré pour effectuer au moins l'une parmi une opération dans laquelle une force de freinage est appliquée non seulement à la roue avant (3), mais également à la roue arrière (4), lorsque le conducteur a actionné l'élément d'actionnement de frein de roue avant (BL) et une opération dans laquelle la force de freinage est appliquée non seulement à la roue arrière (4), mais également à la roue avant (3), lorsque le conducteur a actionné l'élément d'actionnement de frein de roue arrière (BP),
**caractérisé par le fait que** l'appareil de freinage à verrouillage (5) est configuré pour commander la force de freinage appliquée à la roue avant (3) et la force de freinage appliquée à la roue arrière (4) de sorte qu'un rapport entre la force de freinage appliquée à la roue arrière (4) et la force de freinage appliquée à la roue avant (3) lorsque l'élément d'actionnement de frein de roue avant (BL) est actionné et que l'élément d'actionnement de frein de roue arrière (BP) n'est pas actionné tandis que le véhicule (1) se déplace sur une pente descendante ou une pente ascendante soit différent d'un rapport entre la force de freinage appliquée à la roue arrière (4) et la force de freinage appliquée à la roue avant (3) lorsque l'élément d'actionnement de frein de roue avant (BL) est actionné et que l'élément d'actionnement de frein de roue arrière (BP) n'est pas actionné tandis que le véhicule (1) se déplace sur une surface de route horizontale, ou
l'appareil de freinage à verrouillage (5) est configuré pour commander la force de freinage appliquée à la roue avant (3) et la force de freinage appliquée à la roue arrière (4) de sorte qu'un rapport entre la force de freinage appliquée à la roue avant (3) et la force de freinage appliquée à la roue arrière (4) lorsque l'élément d'actionnement de frein de roue arrière (BP) est actionné et que l'élément d'actionnement de frein de roue avant (BL) n'est pas actionné tandis que le véhicule (1) se déplace sur une pente descendante ou une pente ascendante soit différent d'un rapport entre la force de freinage appliquée à la roue avant (3) et la force de freinage appliquée à la roue arrière (4) lorsque l'élément d'actionnement de frein arrière (BP) est actionné et que l'élément d'actionnement de frein avant (BL) n'est pas actionné tandis que le véhicule (1) se déplace sur une surface de route horizontale.

2. Véhicule à inclinaison (1) selon la revendication 1, comprenant par ailleurs: une unité de détection d'inclinaison de surface de route (61) configurée pour détecter un état d'inclinaison d'une surface de route sur laquelle le véhicule (1) se déplace par rapport à une direction avant-arrière du véhicule (1),
dans lequel l'appareil de freinage à verrouillage (5) comporte:
une unité de détection de quantité d'actionnement de frein de roue avant (63) configurée pour détecter une quantité d'actionnement de l'élément d'actionnement de frein de roue avant (BL); et
une unité de génération de force de freinage à verrouillage de roue arrière (57) configurée pour générer la force de freinage à appliquer à la roue arrière (4) sur base de l'état d'inclinaison de la surface de route par rapport à la direction avant-arrière du véhicule (1) obtenu par l'unité de détection d'inclinaison de surface de route (61) et de la quantité d'actionnement de l'élément d'actionnement de frein de roue avant (BL) obtenue par l'unité de détection de quantité d'actionnement de frein de roue avant (63), ou
l'appareil de freinage à verrouillage (5) comporte:
une unité de détection de quantité d'actionnement de frein de roue arrière (64) configurée pour détecter une quantité d'actionnement de l'élément d'actionnement de frein de roue arrière (BP); et
une unité de génération de force de freinage à verrouillage de roue avant (56) configurée pour générer la force de freinage à appliquer à la roue avant (3) sur base de l'état d'inclinaison de surface de route par rapport à la direction avant-arrière du véhicule (1) obtenu par l'unité de détection d'inclinaison de surface de route (61) et de la quantité d'actionnement de l'élément d'actionnement de frein de roue arrière (BP) obtenue par l'unité de détection de quantité d'actionnement de frein de roue arrière (64),
dans lequel l'unité de génération de force de freinage à verrouillage de roue arrière (57) est configurée pour commander la force de freinage appliquée à la roue arrière (4) de sorte qu'un rapport entre la force de freinage appliquée à la roue arrière (4) et la force de freinage appliquée à la roue avant (3) lorsque l'élément d'actionnement de frein de roue avant (BL) est actionné et que l'élément d'actionnement de frein de roue arrière (BP) n'est pas actionné si l'unité de détection d'inclinaison de surface de route (61) a détecté que la surface de route est une pente descendante ou une pente ascendante soit différent d'un rapport entre la force de freinage appliquée à la roue arrière (4) et la force de freinage appliquée à la roue avant (3) lorsque l'élément d'actionnement de frein de roue avant (BL) est actionné et que l'élément d'actionnement de frein de roue arrière (BP) n'est pas actionné si l'unité de détection d'inclinaison de surface de route (61) a détecté que la surface de route est horizontale; ou
dans lequel l'unité de génération de force de freinage à verrouillage de roue avant (56) est configurée pour commander la force de freinage appliquée à la roue avant (3) de sorte qu'un rapport entre la force de freinage appliquée à la roue avant (3) et la force de freinage appliquée à la roue arrière (4) lorsque l'élément d'actionnement de frein de roue arrière (BP) est actionné et que l'élément d'actionnement de frein de roue avant (BL) n'est pas actionné si l'unité de détection d'inclinaison de surface de route (61) a détecté que la surface de route est une pente descendante ou une pente ascendante soit différent d'un rapport entre la force de freinage appliquée à la roue avant (3) et la force de freinage appliquée à la roue arrière (4) lorsque l'élément d'actionnement de frein de roue arrière (BP) est actionné et que l'élément d'actionnement de frein de roue avant (BL) n'est pas actionné si l'unité de détection d'inclinaison de surface de route (61) a détecté que la surface de route est horizontale.

3. Véhicule à inclinaison (1) selon la revendication 2, dans lequel l'appareil de freinage à verrouillage (5) comporte: l'unité de détection de quantité d'actionnement de frein de roue avant (63); l'unité de génération de force de freinage à verrouillage de roue arrière (57); et une unité de génération de force de freinage de roue avant (54) configurée pour générer la force de freinage à appliquer à la roue avant (3) sur base de la quantité d'actionnement de l'élément d'actionnement de frein de roue avant (BL) obtenue par l'unité de détection de quantité d'actionnement de frein de roue avant (63), ou
l'appareil de freinage à verrouillage (5) comporte: l'unité de détection de quantité d'actionnement de frein de roue arrière (64); l'unité de génération de force de freinage à verrouillage de roue avant (56); et une unité de génération de force de freinage de roue arrière (55) configurée pour générer la force de freinage à appliquer à la roue arrière (4) sur base de la quantité d'actionnement de l'élément d'actionnement de frein de roue arrière (BP) obtenue par l'unité de détection de quantité d'actionnement de frein de roue arrière (64).

4. Véhicule à inclinaison (1) selon la revendication 3, dans lequel l'unité de génération de force de freinage de roue avant (54) est configurée pour générer la force de freinage à appliquer à la roue avant (3) en fonction de l'état d'inclinaison de la surface de route par rapport à la direction avant-arrière du véhicule (1) obtenu par l'unité de détection d'inclinaison de surface de route (61), ou
l'unité de génération de force de freinage de roue arrière (55) est configurée pour générer la force de freinage à appliquer à la roue arrière (4) en fonction de l'état d'inclinaison de la surface de route par rapport à la direction avant-arrière du véhicule (1) obtenu par l'unité de détection d'inclinaison de surface de route (61).

5. Véhicule à inclinaison (1) selon la revendication 1, dans lequel l'appareil de freinage à verrouillage (5) est configuré pour commander la force de freinage appliquée à la roue avant (3) et la force de freinage appliquée à la roue arrière (4) de sorte que le rapport entre la force de freinage appliquée à la roue arrière (4) et la force de freinage appliquée à la roue avant (3) lorsque l'élément d'actionnement de frein de roue avant (BL) est actionné et que l'élément d'actionnement de frein de roue arrière (BP) n'est pas actionné tandis que le véhicule (1) se déplace sur une pente descendante ou une pente ascendante soit différent du rapport entre la force de freinage appliquée à la roue arrière (4) et la force de freinage appliquée à la roue avant (3) lorsque l'élément d'actionnement de frein de roue avant (BL) est actionné et que l'élément d'actionnement de frein de roue arrière (BP) n'est pas actionné tandis que le véhicule (1) se déplace sur une surface de route horizontale, et
pour commander la force de freinage appliquée à la roue avant (3) et la force de freinage appliquée à la roue arrière (4) de sorte que le rapport entre la force de freinage appliquée à la roue avant (3) et la force de freinage appliquée à la roue arrière (4) lorsque l'élément d'actionnement de frein de roue arrière (BP) est actionné et que l'élément d'actionnement de frein de roue avant (BL) n'est pas actionné tandis que le véhicule (1) se déplace sur une pente descendante ou une pente ascendante soit différent du rapport entre la force de freinage appliquée à la roue avant (3) et la force de freinage appliquée à la roue arrière (4) lorsque l'élément d'actionnement de frein de roue arrière (BP) est actionné et que l'élément d'actionnement de frein de roue avant (BL) n'est pas actionné tandis que le véhicule (1) se déplace sur une surface de route horizontale.

6. Véhicule à inclinaison (1) selon la revendication 5, comprenant par ailleurs:
une unité de détection d'inclinaison de surface de route (61) configurée pour détecter un état d'inclinaison d'une surface de route sur laquelle le véhicule (1) se déplace par rapport à une direction avant-arrière du véhicule (1),
dans lequel l'appareil de freinage à verrouillage (5) comporte par ailleurs:
une unité de détection de quantité d'actionnement de frein de roue avant (63) configurée pour détecter une quantité d'actionnement de l'élément d'actionnement de frein de roue avant (BL); et
une unité de génération de force de freinage à verrouillage de roue arrière (57) configurée pour générer la force de freinage à appliquer à la roue arrière (4) sur base de l'état d'inclinaison de la surface de route par rapport à la direction avant-arrière du véhicule (1) obtenu par l'unité de détection d'inclinaison de surface de route (61) et de la quantité d'actionnement de l'élément d'actionnement de frein de roue avant (BL) obtenue par l'unité de détection de quantité d'actionnement de frein de roue avant (63), et
l'appareil de freinage à verrouillage (5) comporte par ailleurs:
une unité de détection de quantité d'actionnement de frein de roue arrière (64) configurée pour détecter une quantité d'actionnement de l'élément d'actionnement de frein de roue arrière (BP); et
une unité de génération de force de freinage à verrouillage de roue avant (56) configurée pour générer la force de freinage à appliquer à la roue avant (3) sur base de l'état d'inclinaison de la surface de route par rapport à la direction avant-arrière du véhicule (1) obtenu par l'unité de détection d'inclinaison de surface de route (61) et de la quantité d'actionnement de l'élément d'actionnement de frein de roue arrière (BP) obtenue par l'unité de détection de quantité d'actionnement de frein de roue arrière (64),
dans lequel l'unité de génération de force de freinage à verrouillage de roue arrière (57) est configurée pour commander la force de freinage appliquée à la roue arrière (4) de sorte qu'un rapport entre la force de freinage appliquée à la roue arrière (4) et la force de freinage appliquée à la roue avant (3) lorsque l'élément d'actionnement de frein de roue avant (BL) est actionné et que l'élément d'actionnement de frein de roue arrière (BP) n'est pas actionné si l'unité de détection d'inclinaison de surface de route (61) a détecté que la surface de route est une pente descendante ou une pente ascendante soit différent d'un rapport entre la force de freinage appliquée à la roue arrière (4) et la force de freinage appliquée à la roue avant (3) lorsque l'élément d'actionnement de frein de roue avant (BL) est actionné et que l'élément d'actionnement de frein de roue arrière (BP) n'est pas actionné si l'unité de détection d'inclinaison de surface de route (61) a détecté que la surface de route est horizontale, et
l'unité de génération de force de freinage à verrouillage de roue avant (56) est configurée pour commander la force de freinage appliquée à la roue avant (3) de sorte qu'un rapport entre la force de freinage appliquée à la roue avant (3) et la force de freinage appliquée à la roue arrière (4) lorsque l'élément d'actionnement de frein de roue arrière (BP) est actionné et que l'élément d'actionnement de frein de roue avant (BL) n'est pas actionné si l'unité de détection d'inclinaison de surface de route (61) a détecté que la surface de route est une pente descendante ou une pente ascendante soit différent d'un rapport entre la force de freinage appliquée à la roue avant (3) et la force de freinage appliquée à la roue arrière (4) lorsque l'élément d'actionnement de frein de roue arrière (BP) est actionné et que l'élément d'actionnement de frein de roue avant (BL) n'est pas actionné si l'unité de détection d'inclinaison de surface de route (61) a détecté que la surface de route est horizontale.

7. Véhicule à inclinaison (1) selon la revendication 6, dans lequel l'appareil de freinage à verrouillage (5) comporte: l'unité de détection de quantité d'actionnement de frein de roue avant (63); l'unité de génération de force de freinage à verrouillage de roue arrière (57); et une unité de génération de force de freinage de roue avant (54) configurée pour générer la force de freinage à appliquer à la roue avant (3) sur base de la quantité d'actionnement de l'élément d'actionnement de frein de roue avant (BL) obtenue l'unité de détection de quantité d'actionnement de frein de roue avant (63); et
l'unité de détection de quantité d'actionnement de frein de roue arrière (64); l'unité de génération de force de freinage à verrouillage de roue avant (56); et une unité de génération de force de freinage de roue arrière (55) configurée pour générer la force de freinage à appliquer à la roue arrière (4) sur base de la quantité d'actionnement de l'élément d'actionnement de frein de roue arrière (BP) obtenue l'unité de détection de quantité d'actionnement de frein de roue arrière (64).

8. Véhicule à inclinaison (1) selon la revendication 7, dans lequel l'unité de génération de force de freinage de roue avant (54) est configurée pour générer la force de freinage à appliquer à la roue avant (3) en fonction de l'état d'inclinaison de la surface de route par rapport à la direction avant-arrière du véhicule (1) obtenu par l'unité de détection d'inclinaison de surface de route (61), et
l'unité de génération de force de freinage de roue arrière (55) est configurée pour générer la force de freinage à appliquer à la roue arrière (4) en fonction de l'état d'inclinaison de la surface de route par rapport à la direction avant-arrière du véhicule (1) obtenu par l'unité de détection d'inclinaison de surface de route (61).

9. Véhicule à inclinaison (1) selon l'une quelconque des revendications 1 à 8, dans lequel l'appareil de freinage à verrouillage (5) est configuré pour commander la force de freinage appliquée à la roue avant (3) et la force de freinage appliquée à la roue arrière (4) de sorte qu'un rapport entre la force de freinage appliquée à la roue arrière (4) et la force de freinage appliquée à la roue avant (3) lorsque l'élément de d'actionnement de frein de roue avant (BL) est actionné et que l'élément d'actionnement de frein de roue arrière (BP) n'est pas actionné tandis que le véhicule (1) se déplace sur une pente descendante soit inférieur au rapport entre la force de freinage appliquée à la roue arrière (4) et la force de freinage appliquée à la roue avant (3) lorsque l'élément d'actionnement de frein de roue avant (BL) est actionné et que l'élément d'actionnement de frein de roue arrière (BP) n'est pas actionné tandis que le véhicule (1) se déplace sur une surface de route horizontale, et qu'un rapport entre la force de freinage appliquée à la roue arrière (4) et la force de freinage appliquée à la roue avant (3) lorsque l'élément d'actionnement de frein de roue avant (BL) est actionné et que l'élément d'actionnement de frein de roue arrière (BP) n'est pas actionné tandis que le véhicule (1) se déplace sur une pente ascendante soit supérieur au rapport entre la force de freinage appliquée à la roue arrière et la force de freinage appliquée à la roue avant (3) lorsque l'élément d'actionnement de frein de roue avant (BL) est actionné et que l'élément d'actionnement de frein de roue arrière (BP) n'est pas actionné tandis que le véhicule (1) se déplace sur une surface de route horizontale, ou
l'appareil de freinage à verrouillage (5) est configuré pour commander la force de freinage appliquée à la roue avant (3) et la force de freinage appliquée à la roue arrière (4) de sorte qu'un rapport entre la force de freinage appliquée à la roue avant (3) et la force de freinage appliquée à la roue arrière (4) lorsque l'élément d'actionnement de frein de roue arrière (BP) est actionné et que l'élément d'actionnement de frein de roue avant (BL) n'est pas actionné tandis que le véhicule (1) se déplace sur une pente descendante soit supérieur au rapport entre la force de freinage appliquée à la roue avant (3) et la force de freinage appliquée à la roue arrière (4) lorsque l'élément d'actionnement de frein de roue arrière (BP) est actionné et que l'élément d'actionnement de frein de roue avant (BL) n'est pas actionné tandis que le véhicule (1) se déplace sur une surface de route horizontale, et qu'un rapport entre la force de freinage appliquée à la roue avant (3) et la force de freinage appliquée à la roue arrière (4) lorsque l'élément d'actionnement de frein de roue arrière (BP) est actionné et que l'élément d'actionnement de frein de roue avant (BL) n'est pas actionné tandis que le véhicule (1) se déplace sur une pente ascendante soit inférieur au rapport entre la force de freinage appliquée à la roue avant (3) et la force de freinage appliquée à la roue arrière (4) lorsque l'élément d'actionnement de frein de roue arrière (BP) est actionné et que l'élément d'actionnement de frein de roue avant (BL) n'est pas actionné tandis que le véhicule (1) se déplace sur une surface de route horizontale.

10. Véhicule à inclinaison (1) selon l'une quelconque des revendications 1 à 8, dans lequel l'appareil de freinage à verrouillage (5) est configuré pour commander la force de freinage appliquée à la roue avant (3) et la force de freinage appliquée à la roue arrière (4) de sorte qu'un rapport entre la force de freinage appliquée à la roue arrière (4) et la force de freinage appliquée à la roue avant (3) lorsque l'élément d'actionnement de frein de roue avant (BL) est actionné et que l'élément d'actionnement de frein de roue arrière (BP) n'est pas actionné tandis que le véhicule (1) se déplace sur une pente descendante soit supérieur au rapport entre la force de freinage appliquée à la roue arrière (4) et la force de freinage appliquée à la roue avant (3) lorsque l'élément d'actionnement de frein (BL) de roue avant est actionné et que l'élément d'actionnement de frein de roue arrière (BP) n'est pas actionné tandis que le véhicule (1) se déplace sur une surface de route horizontale, et qu'un rapport entre la force de freinage appliquée à la roue arrière (4) et la force de freinage appliquée à la roue avant (3) lorsque l'élément d'actionnement de frein de roue avant (BL) est actionné et que l'élément d'actionnement de frein de roue arrière (BP) n'est pas actionné tandis que le véhicule (1) se déplace sur une pente ascendante soit inférieur au rapport entre la force de freinage appliquée à la roue arrière (4) et la force de freinage appliquée à la roue avant (3) lorsque l'élément d'actionnement de frein de roue avant (BL) est actionné et que l'élément d'actionnement de frein de roue arrière (BP) n'est pas actionné tandis que le véhicule (1) se déplace sur une surface de route horizontale, ou
l'appareil de freinage à verrouillage (5) est configuré pour commander la force de freinage appliquée à la roue avant (3) et la force de freinage appliquée à la roue arrière (4) de sorte qu'un rapport entre la force de freinage appliquée à la roue avant (3) et la force de freinage appliquée à la roue arrière (4) lorsque l'élément d'actionnement de frein de roue arrière (BP) est actionné et que l'élément d'actionnement de frein de roue avant (BL) n'est pas actionné tandis que le véhicule (1) se déplace sur une pente descendante soit inférieur au rapport entre la force de freinage appliquée à la roue avant (3) et la force de freinage appliquée à la roue arrière (4) lorsque l'élément d'actionnement de frein de roue arrière (BP) est actionné et que l'élément d'actionnement de frein de roue avant (BL) n'est pas actionné tandis que le véhicule (1) se déplace sur une surface de route horizontale, et qu'un rapport entre la force de freinage appliquée à la roue avant (3) et la force de freinage appliquée à la roue arrière (4) lorsque l'élément d'actionnement de frein de roue arrière (BP) est actionné et que l'élément d'actionnement de frein de roue avant (BL) n'est pas actionné tandis que le véhicule (1) se déplace sur une pente ascendante soit supérieur au rapport entre la force de freinage appliquée à la roue avant (3) et la force de freinage appliquée à la roue arrière (4) lorsque l'élément d'actionnement de frein de roue arrière (BP) est actionné et que l'élément d'actionnement de frein de roue avant (BL) n'est pas actionné tandis que le véhicule (1) se déplace sur une surface de route horizontale.
